# EUROPEAN PATENT SPECIFICATION

(11) **EP 1 190 367 B1**
(45) Date of publication and mention of the grant of the patent: **09.04.2003**
(21) Application number: 00931187.9
(22) Date of filing: 11.05.2000
(51) Int. Cl.: G06K 7/00, G06K 13/08

(54) **COMPACT ASSEMBLY FOR THE CONNECTION OF A SMART CARD, COMPRISING MEANS FOR EJECTING THE CARD**
KOMPAKTE CHIPKARTENVERBINDUNGSANORDNUNG MIT EINER KARTENAUSWURFVORRICHTUNG
ENSEMBLE COMPACT DE CONNEXION D'UNE CARTE A PUCE, COMPRENANT UN ORGANE D'EJECTION DE CARTE

(30) Priority: 17.05.1999 FR 9906196
(43) Date of publication of application: 27.03.2002
(73) Proprietor: ITT MANUFACTURING ENTERPRISES, INC., Wilmington, Delaware 19801 (US)
(72) Inventor: BRICAUD, Hervé, F-39100 Dole (FR); PIZARD, Yves, F-39100 Dole (FR)
(74) Representative: Kohn, Philippe
(86) International application number: PCT/EP00/04253
(87) International publication number: WO 00/070532

(56) References cited:
- EP-A- 0 749 088
- WO-A-96/02893
- DE-C- 19 545 502

## Description

The present invention relates to an assembly for the connection of an electronic memory card, or smart card, having, on one of its main faces, electrical contact pads connected to an integrated circuit in the card.

Such an assembly must help in placing the card in an operating position in which the electrical connection is ensured.

Such an assembly must also allow the user to easily extract the card after it has been used.

According to a first known design, which is for example used in apparatuses allowing bank transactions to be carried out, it is the apparatus itself which, at the end of the transaction operations, using motorized means, ejects the card into a position such that it allows the user to grip the card.

According to another, particularly simple design, the card, in the operating position, projects significantly from the receiving device, by several tens of millimetres, so as simply to allow the user to take hold of the card by the projecting portion of the latter and to extract it from the receiving device by pulling on the card in a direction parallel to the plane of the card.

However, this design has the drawback of leaving a significant part of the card projecting when the latter is in the operating phase. For many applications, and for example for safety reasons when the card is used in an apparatus placed in the passenger compartment of a motor vehicle, it is desirable that the card protrude only very slightly to the outside of the receiving device when it is in the connection and operating position, or that a small part of the card be accessible via a recess provided for this purpose in the casing of the equipment which receives it.

Such an arrangement, in which the card protrudes only a few millimetres to the outside of the receiving device, makes it particularly difficult, if not impossible, for the user to manually grip the card.

Document EP-A-0,350,509 has already proposed a receiving device in which, in the operating position, the card is entirely inserted into a device, the insertion window for the card being closed by a hinged flap which, when the user desires to extract the card again, is swung away by the user and causes the expulsion of the card out of the receiving device.

This design is complex and also has the drawback of requiring on the part of the user to manipulate the cover, the gripping means of which are not very accessible and not very easy to use, especially when the manipulating, for the purpose of extraction, is done "blind".

Within the context of an application to a portable case, document FR-A-2,681,711 has already proposed a receiving device for a smart card, of the type comprising a case, one face of which delimits a window allowing access to a carriage which includes a compartment for accommodating the card and which can slide in the case between a rest position, in which the card can be placed in the compartment or extracted from the latter, and an operating position, in which the contact pads on the card interact with electrical contact elements of an electrical connector placed in the casing, and of the type comprising stop means, placed between the casing and the carriage in order to delimit the rest position of the latter, and means for locking the carriage in the operating position.

In the design presented in that document, extraction of the card requires grasping the carriage manually by its lateral faces so as to release the locking means and so as to cause it to return to its rest position in which it is possible to have access to the card in its compartment.

The latter design too does not allow the card to be extracted in a simple manner from the receiving device, and especially when done "blind".

A design of a receiving device in which the card, in the operating position, protrudes only very slightly from the receiving device, and in which the handling of the card for the purpose of extracting it may be done easily, and especially done "blind", has been proposed in document WO-A-96/02893 (ITT).

That document thus provides an assembly for the connection of a smart card, having, on one of its main faces, electrical contact pads connected to an integrated circuit in the card, of the type comprising a body, one face of which allows access to a carriage for accommodating the card and which can slide longitudinally along the body between a rear, rest position, in which the card can be placed on the carriage, or extracted, and a forward, operating position, in which the electrical contact pads on the card interact with the electrical contact elements of an electrical connector placed in the body, of the type comprising stop means, for delimiting the rest position of the latter, and means for locking the carriage in the operating position, and of the type in which the carriage is returned elastically to its rest position, the said means for locking the carriage in the operating position, against the elastic return force of the carriage,
- being of the type which is triggered automatically when the carriage reaches its operating position and of the type in which the release is caused by forward movement of the carriage, against the elastic return force, beyond its operating position,
- and including a locking hook carried by the body, an end nose of which hook, when the carriage is near its operating position, engages with a locking cam formed opposite it in the carriage.

The purpose of the invention is to provide an improvement to such a design, which makes it possible in particular to reduce the size of the assembly in all its dimensions so as to make it easier to incorporate it into a small item of electronic equipment such as a cellular telephone of the GSM type and allowing a standardized connector to be used for producing it.

For this purpose, the invention provides an assembly of the abovementioned type, characterized in that the end nose of the locking hook extends transversely in a direction parallel to the plane in which the card and the carriage slide and in that the locking cam is formed in a surface portion of the carriage perpendicular to the plane of sliding.

According to other characteristics of the invention :
- the locking cam has a section for insertion of the locking nose, a section for retention of the locking nose, which determines the operating position of the carriage, and a section for releasing the locking nose ;
- the locking cam has an approximately heart-shaped profile ;
- the locking hook is an elongate element which extends approximately along the direction of sliding of the carriage, a free end of which is bent through 90° in order to form the locking nose, and which is able to pivot in order to allow the locking nose to engage in and escape from the locking cam ;
- the locking hook is an element consisting of a bent metal wire ;
- the locking nose is urged elastically towards the locking cam ;
- the carriage includes a stop for positioning the card, which engages with a transverse edge of the card which extends in a direction perpendicular to the direction of sliding of the carriage ;
- the means for the elastic return of the carriage towards its rest position comprise at least one compression spring placed between bearing surfaces formed on the carriage and on the body ;
- the body is made in two parts, a front part and a rear part, which are assembled in the longitudinal direction in order to imprison the carriage ;
- the rear part of the body includes a front section in the form of a U open longitudinally towards the front for insertion of the carriage which is slidingly guided between the two opposed, longitudinally oriented, horizontal lateral branches of the front section, which branches are joined together by a transverse branch which includes the means for stopping the carriage in the rest position, and in that the front part of the body constitutes a closure end-piece which is fitted over the front free ends of the said branches ;
- the front free end of the said compression return spring bears longitudinally against a surface formed in the front part of the body forming the end-piece ;
- the front part of the body is fitted over the rear part by snap-fitting ;
- the carriage has a rear portion for guiding and for stopping, and a front portion bounded transversely outwards by two longitudinally oriented vertical lateral faces in one of which the said locking cam is formed ;
- the rear free end of the elongate element forming the hook is bent through 90° transversely inwards in order to form the said locking nose and its front free end is extended transversely inwards by a mounting and hinging branch ;
- the said mounting and hinging branch of the elongate element is interposed between the front free end of the return spring and the said surface formed in the front part of the body forming the end-piece ;
- the rear section of the rear part of the body includes a housing which accommodates the connector, in which housing the latter is mounted in the vertical direction ;
- the housing and the insulating body forming the contact holder of the connector include complementary stop means for determining the vertical position of the connector with respect to the body and complementarily shaped elastically deformable means for vertical retention of the abutted connector in its housing ;
- the assembly includes a switch, of the normally open or normally closed type, for detecting the presence of a card and the end of insertion travel of the latter, which switch does not change state when the carriage undergoes, in both directions, the overtravel beyond the said operating position.

Further characteristics and advantages of the invention will appear upon reading the detailed description which follows, for the understanding of which reference will be made to the appended drawings in which :
- Figure 1 is a perspective, top and three-quarter rear view of a connection assembly according to the invention, which is shown with the carriage in the rear, rest position ;
- Figure 2 is a view similar to that in Figure 1, in which the carriage is shown in the front, working position ;
- Figure 3 is a perspective, bottom and three-quarter rear view of the assembly in Figures 1 and 2, in which the carriage is shown in a front overtravel position that it occupies temporarily and in an unstable manner when the user acts on the card for the purpose of ejecting it ;
- Figure 4 is a view on a large scale of the assembly, in cross section through a vertical mid-plane of the connector ;
- Figure 5 is a perspective, top and three-quarter rear view of the rear part of the body of the assembly ;
- Figure 6 is a perspective, bottom and three-quarter rear view of the body in Figure 5 ;
- Figure 7 is a perspective top view of the electrical connector of the assembly ;
- Figure 8 is a perspective bottom view of the connector in Figure 7 ;

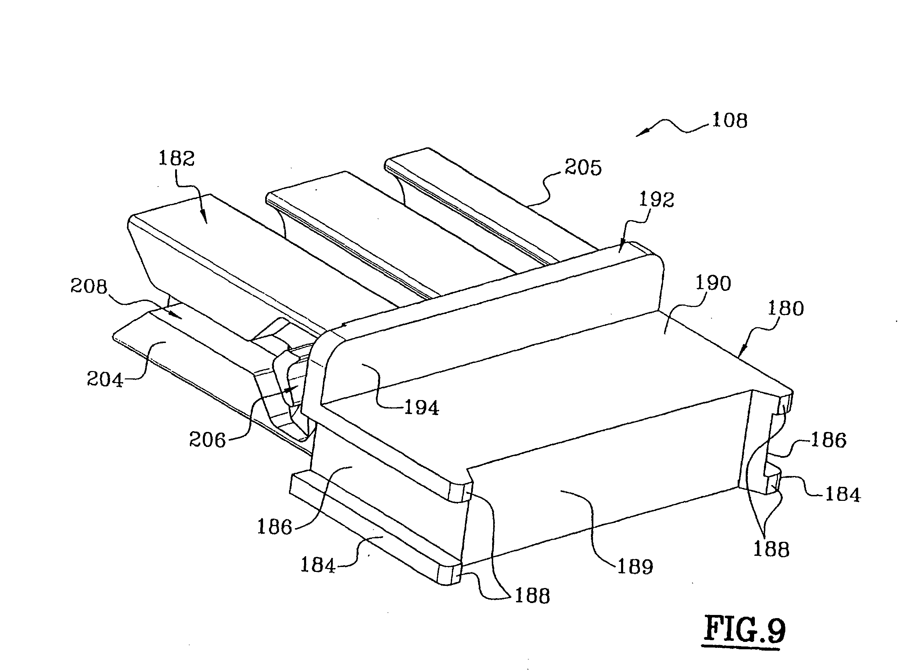

- Figure 9 is a perspective three-quarter rear view of the carriage on a larger scale ;

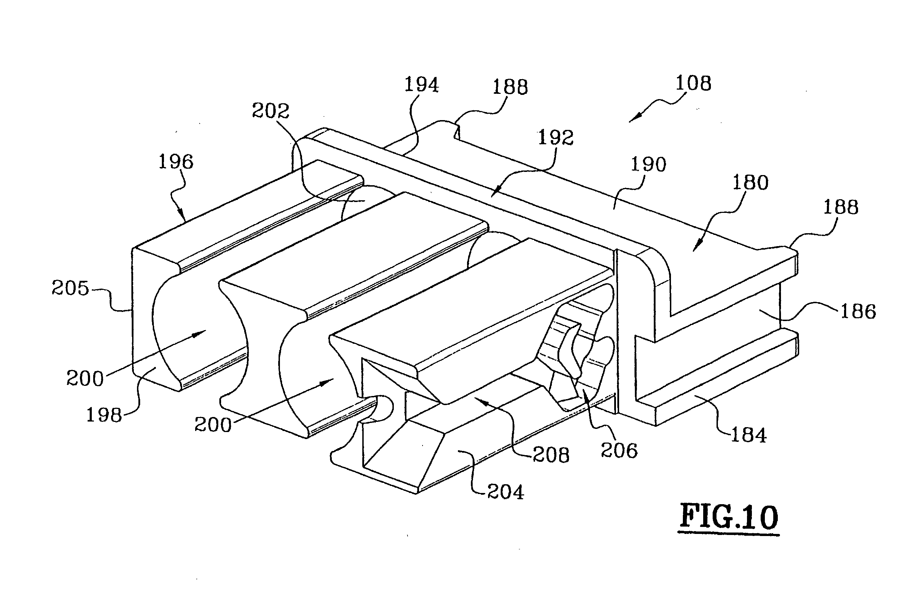

- Figure 10 is a perspective three-quarter front view of the carriage in Figure 9 ;

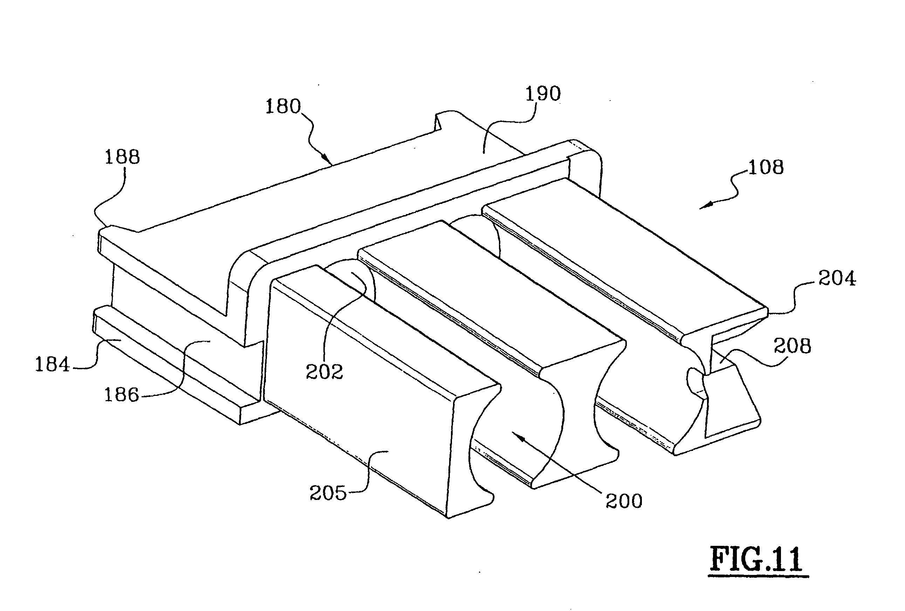

- Figure 11 is a view of the carriage in Figure 10 at another angle ;
- Figure 12 is a side view of the carriage illustrating its longitudinal lateral face which includes the locking cam ;

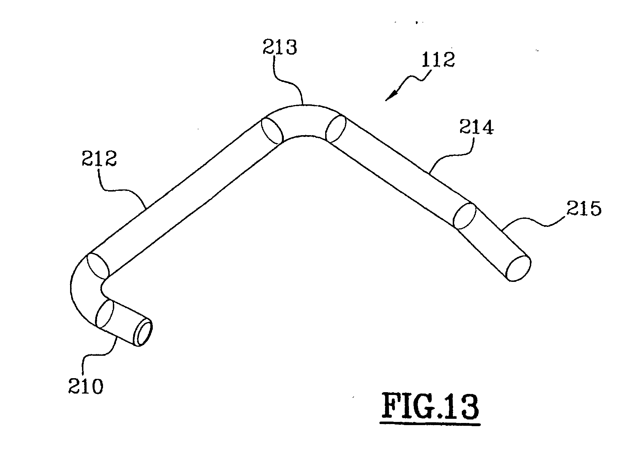

- Figure 13 is a perspective view on a large scale illustrating the elongate element which includes the locking nose ;
- Figure 14 is a perspective three-quarter rear view on a large scale of the front part forming the end-piece of the body of the assembly ;
- Figure 15 is an exploded perspective view of all of the components of the assembly illustrated in Figure 1 ;
- Figure 16 is a perspective view on a large scale of one of the contact blades of the connector ;
- Figure 17 is a top view of the assembly according to the invention, in which the carriage is illustrated in the rest position and in which the main components are shown as if they were transparent ;
- Figure 18 is a side view of Figure 17 ;
- Figures 19 and 20 are views similar to those in Figures 17 and 18, in which the carriage is illustrated in the working position ;
- Figures 21 and 22 are views similar to those in Figures 17 and 18, in which the carriage is illustrated in the overtravel position ;

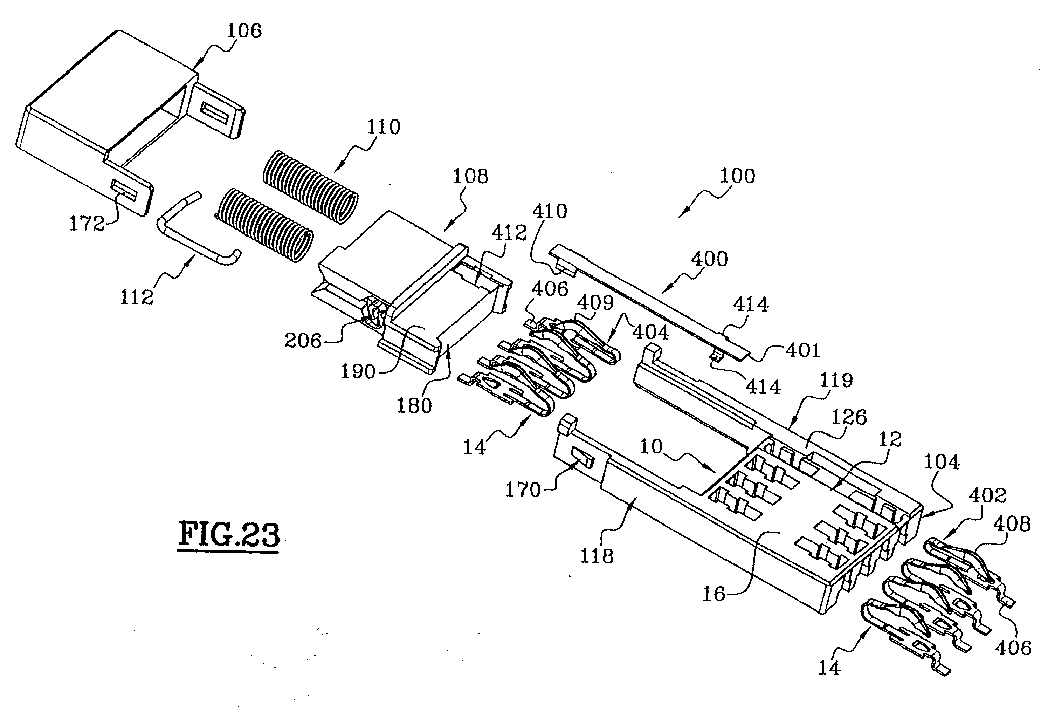

- Figure 23 is an exploded perspective view of the components of a second embodiment of an assembly according to the teachings of the invention, in which the connector is incorporated into the rear part of the body of the assembly ;
- Figure 24 is a top view of the assembly in Figure 23, in which the carriage is illustrated in the rear, rest position ;
- Figure 25 is a view similar to that in Figure 24, in which the carriage is illustrated in the front, working position ; and
- Figure 26 is a view similar to that in Figure 24, in which the carriage is shown in the front overtravel position.

In the description which follows, identical, similar or analogous elements will be denoted by the same reference numbers.

In order to facilitate the description and the drafting of the claims, the terms vertical, horizontal, upper, lower, front, rear, etc. will be used by way of non-limiting example, these referring to the figures.

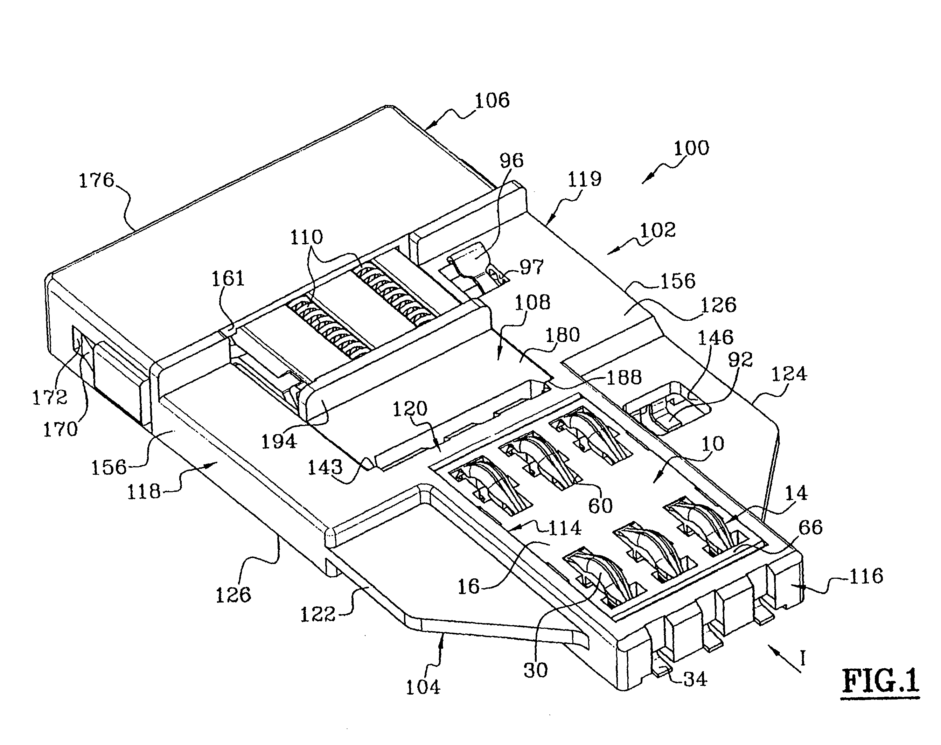

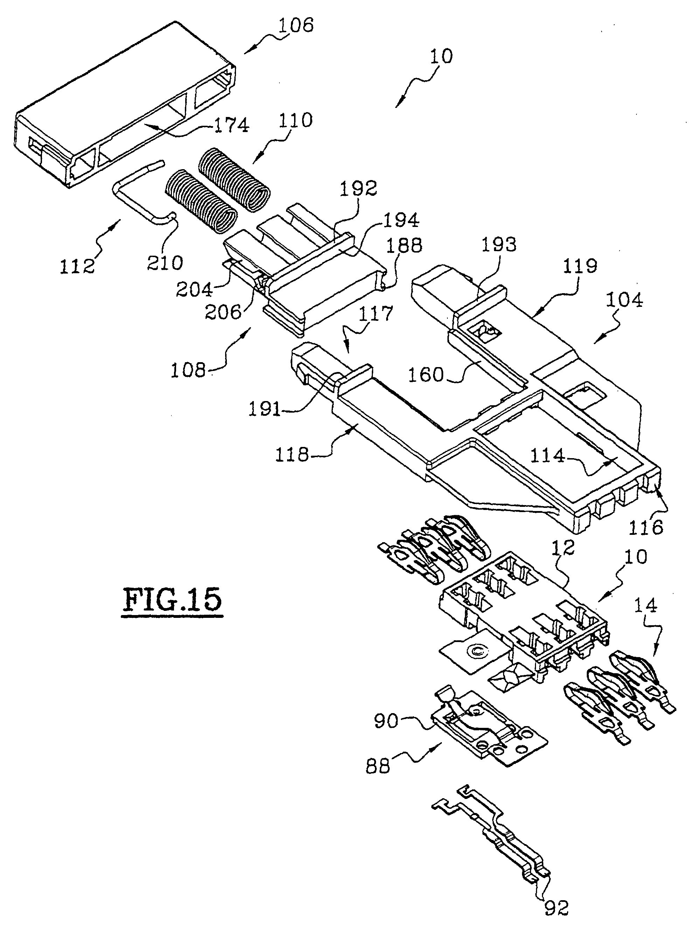

As may be seen especially in Figures 1 and 15, the apparatus 100 according to the invention consists of a body 102 composed of two parts, a rear part 104 and a front part 106, which are produced by moulding a plastic, of an electrical connector 10, of a switch 88 for detecting the presence and the end of insertion travel of a card in the active or working position, of a carriage 108 for ejecting the card, together with its two return springs 110 and its locking hook 112 which is an element consisting of a bent metal wire, the main body of which extends longitudinally parallel to the direction "I" of insertion of the card and of sliding of the carriage 108.

The connector 10 will firstly be described.

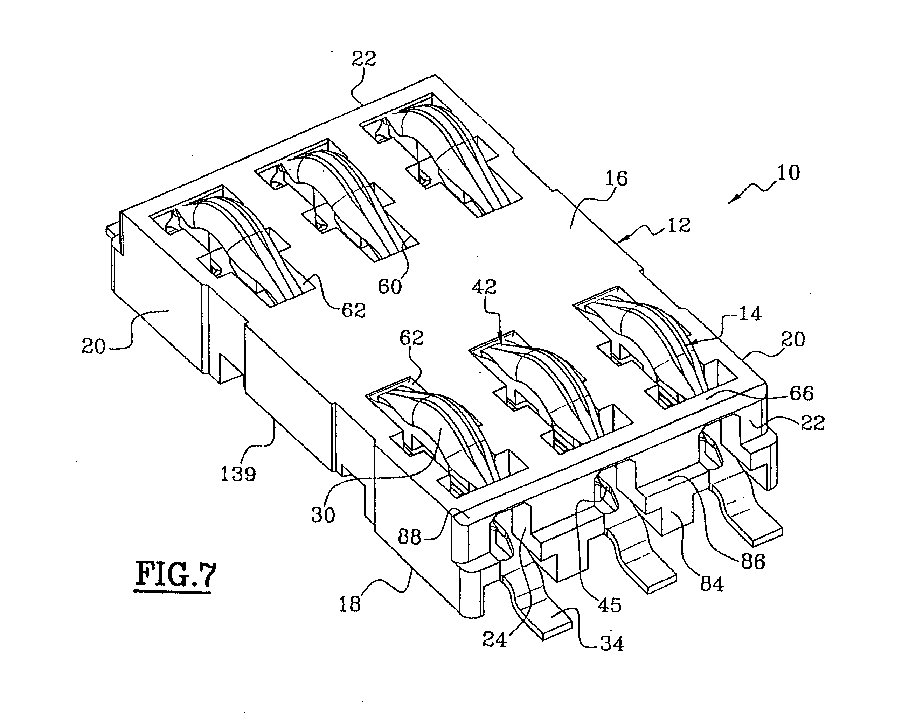

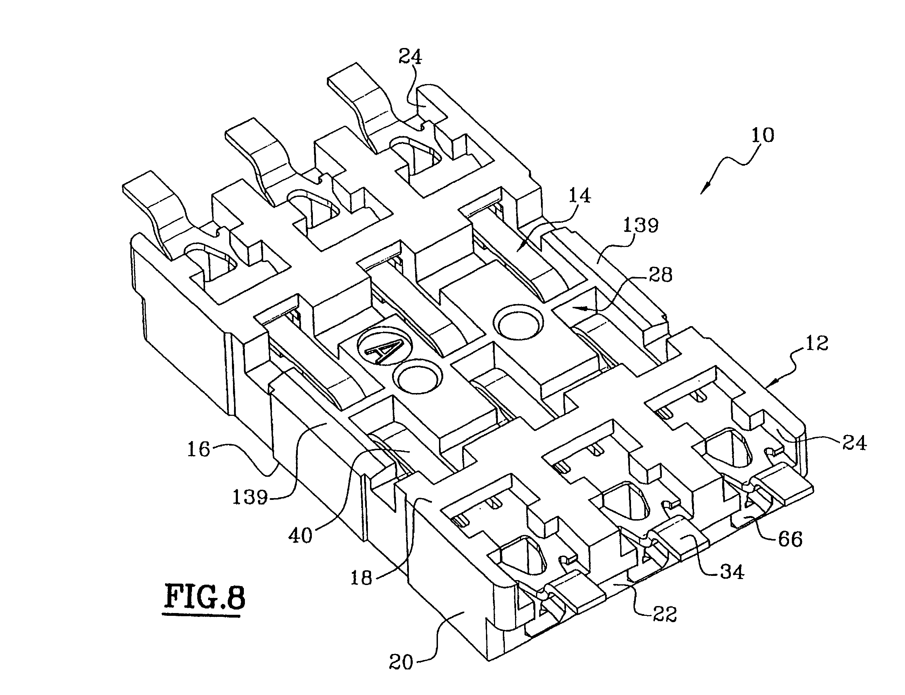

Figures 7 and 8 shown an illustrative embodiment of an electrical connector 10 incorporated into the connection assembly 100.

According to the known general design in document WO-A-95/18421, the connector 10 essentially consists of an insulating plastic block or body 12, produced by moulding, which constitutes a support element forming a contact holder for a series of contact blades 14 made of conducting material.

In general, the connector 10 exhibits double design symmetry with respect to two perpendicular vertical planes of symmetry, one being longitudinal and the other transverse.

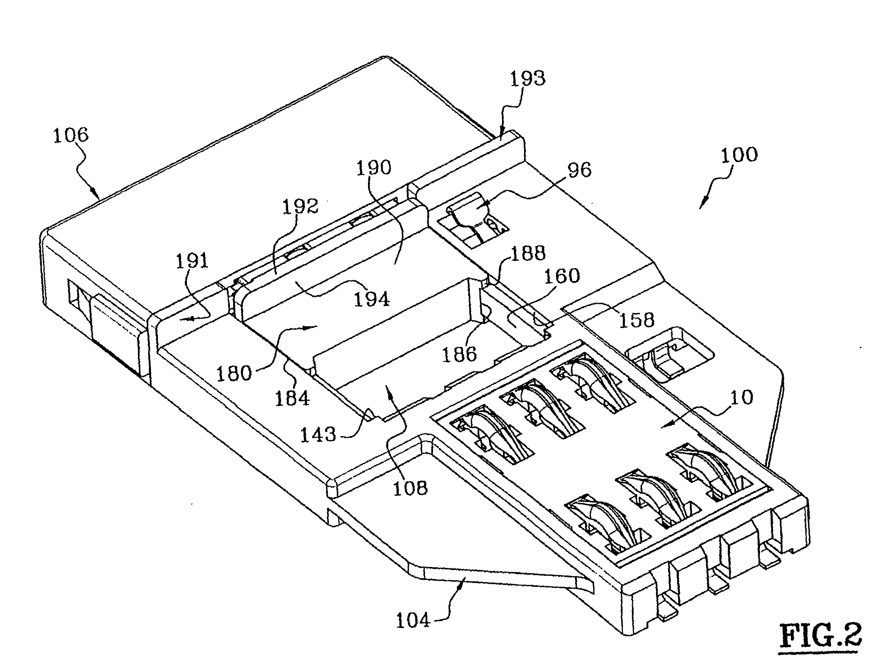

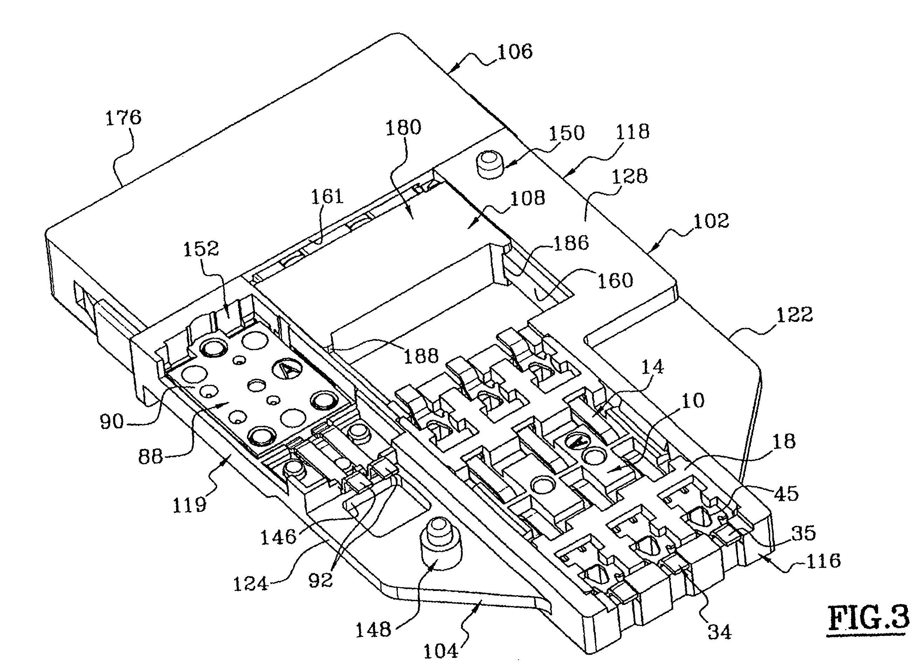

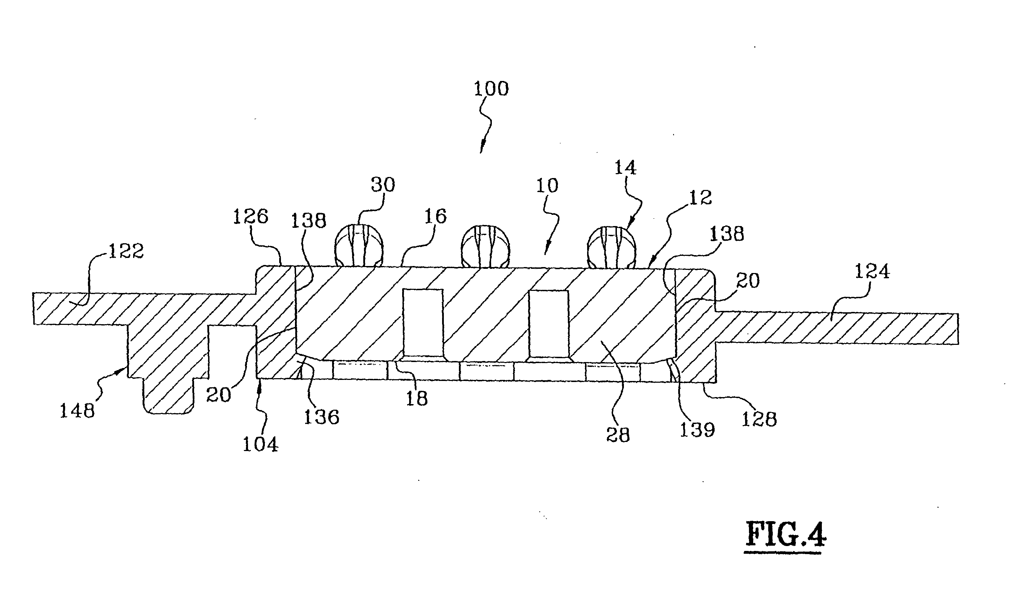

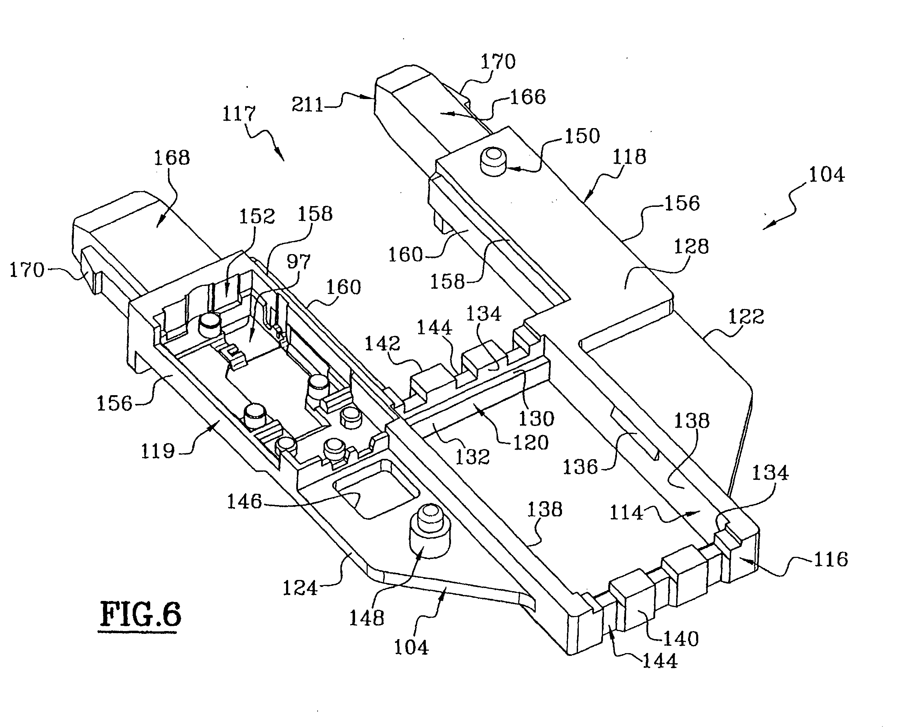

In the embodiment illustrated in Figures 1 to 8, the connector 10 has three pairs of contact blades 14 aligned longitudinally in pairs.

The connector 10 thus has six contact blades, each capable of interacting, in a known general manner, with a corresponding conducting pad on a smart card (not illustrated in the figures).

The insulating body 12 is a piece having the overall shape of a flattened rectangular parallelepiped which is bounded by a plane horizontal upper face 16, a horizontal lower face 18, two opposed, vertically oriented, longitudinal lateral faces 20 and two opposed, vertically oriented, rear transverse lateral faces 22.

According to the known general design in document WO-A-95/18421, the insulating body 12 has two series of three housings 24 aligned in pairs.

Each housing 24 runs longitudinally into a corresponding rear transverse face 22 and it is open vertically downwards in the lower face 18 and vertically upwards in the upper face 16.

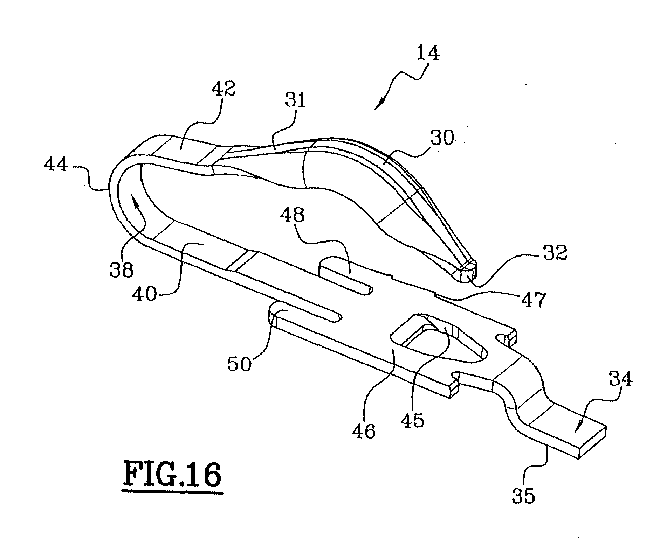

Each housing 24 is designed to accommodate a contact blade 14 made of elastically deformable conducting material, one embodiment of which is illustrated in Figure 16. Each contact blade 14 constitutes a cut and bent conducting element. Each contact blade 14 extends along the longitudinal direction and in a vertical plane parallel to the longitudinal plane of symmetry.

Each contact blade 14 has a first, convex curved contact end 30 which is designed to interact with a corresponding pad on a smart card which can be inserted longitudinally, in a horizontal direction "I" parallel to the housings 24, into a read/write device (not illustrated) which is equipped with a connection assembly 100 which is delivered with the connector 10 already mounted in the body 102.

The curved contact end 30 of each blade 14 is extended longitudinally by an approximately horizontal nose 32, the function of which will be explained below.

Each contact blade 14 also has a connection end 34 which, in the embodiment illustrated in the figures, extends horizontally and longitudinally towards the outside of the insulating body 12 beyond the corresponding rear transverse face 22 with its lower face 35 which here lies approximately in the plane of the lower face 18 of the insulating body 12, being slightly offset downwards by approximately 0.5 mm so that the total thickness of the connector 10, which is approximately 2.4 mm including the height of the output terminals 34, corresponds to the total height of the rear part of the assembly 100.

In the example shown in the figures, the total height between the upper face of the printed-circuit board and the sliding face for the card is approximately equal to 2.4 mm ; it can be reduced to 1.9 mm by using a connector 10 with lower output terminals 34. If the contact blades 14 of the "cantilever" type are replaced with straight contact blades of the "crook" type, the thickness of the front part may be reduced to approximately 1 mm.

Each connection end 34 constitutes a tab allowing each blade 14 to be electrically connected to a conducting track on a printed-circuit board (not illustrated), for example by soldering using the surface mounting technique.

The curved contact end 30 and the connection end 34 of each blade 14 are joined together by a hairpin-shaped central linking part 38.

The central linking part 38 of each blade 14 thus has a first branch 40 which extends in an approximately horizontal longitudinal direction parallel to the lower face 18 of the insulating body 12, and a second branch 42 making an acute angle with the first branch 40, which branches are joined together by the central bend 44 in the form of a U on its side.

The central bend 44 faces towards the centre of the connector 10, that is to say towards the transverse intermediate partition 28, so as to lie approximately in line with the conducting pads on the chip of the smart card when the latter is in the read-write position.

The free end 46 of the first branch 40 of each blade 14 has a greater width than the average width of the blade and it extends longitudinally, vertically in line with the free end in the form of a nose 32 of the curved contact end 30 and has, in a known manner, a hole 45 into which the nose 32 passes when the upper branch 42 with the curved end 30 flexes vertically downwards. Each enlarged free end 46 is extended by the connection tab 34. In a known manner, each free end 46 has, for mounting the blade 14 in its housing 24 and for retaining it therein, a lateral harpoon 48 and a lateral stabilizing tab 50 which are accommodated in complementary lateral slots in each housing 24.

As may be seen in Figure 16, the teeth of the harpoon 47 are formed along a cut longitudinal tab which also, like the tab 50, has the function of stabilizing the contact blade 14 when in position in its housing 24.

Each housing 24 runs into the upper face 16, in which it defines, in top view and as may be seen in Figure 7, a slot 60 which allows passage for the curved contact end 30 of the blade 14 and partly passage for the second branch 42 of the central linking part 38.

Each slot 60 is bounded longitudinally towards the front, that is towards the centre of the connector, by an edge 62 and it is bounded towards the rear by a crosspiece 66 moulded together with the insulating body 12.

Each crosspiece 66 is placed at the upper part of the housing 24 and at its rear transverse edge, that is to say it is flush with the plane of the upper face 16 and with the plane of the corresponding rear transverse space 22.

Each of the two upper longitudinal end corners of the insulating body 12 thus exhibits continuity of material and of profile over the entire transverse width of the insulating body, preferably with a chamfer 68, as illustrated in Figure 7.

Each crosspiece 66 constitutes, by its inclined internal lower face, a stop against which the nose 32 of the associated contact blade 14 bears elastically so as to determine the rest position of the blade 14.

Thus, the curved end 30 of each contact blade 14 is held in a precise geometrical position, especially with respect to the upper face 16, with a slight elastic prestress.

When fitting each contact blade 14 by longitudinal insertion, each crosspiece 66 engages with the inclined upper face 31 of the front longitudinal part of the convex curved end 30 in order to cause elastic displacement of the latter vertically downwards, with the nose 32 penetrating the hole 45.

Each of the transverse lateral faces 22 of the insulating body 12 is provided, in its lower part, with a longitudinal rim 84 which extends over the entire width of the insulating body 12 and which is bounded vertically upwards by a horizontal upper bearing facet 86 with which a complementary part of the body of the device engages, as will be explained below.

The connector 10 is housed in a housing 114 in the rear section 116 of the rear part 104 of the body 102, the front section 117 of which, having an overall shape in the form of a U on its side, consists of two parallel longitudinal arms or branches 118 and 119 joined together by a transverse branch or crosspiece 120.

The upper face of each branch 118, 119 is bounded longitudinally towards the front by a stop plate 191, 193, the two plates being vertical, tranversely oriented and coplanar.

Two horizontal lateral reinforcing wings 122 and 124 join the rear section 116 to the branches 118 and 119 and they extend in an intermediate plane between the horizontal planes corresponding to the upper face 126 and to the lower face 128 common to the branches 118 and 119 and to the rear section 116.

The lateral wing 124 lies at a level approximately 0.5 mm below the plane 126 of sliding of the card, especially so as to create a recess in order to allow embossed cards according to the ISO 7811 standard to be inserted.

The rear section 116 has the overall shape of a rectangular frame which delimits the complementary housing 114 in the insulating body 12 of the connector 10.

The vertical position of the connector 10 in the housing 114, so that its upper face 16 is approximately coplanar with the upper face 126 of the rear section 116 of the body 102, is determined by the upper facets 86 of the rims 84 butting, vertically upwards, against the lower facets 130 of the rims 132 formed in the upper part of the transverse lateral faces 134 of the housing 114.

The connector 10 is held in place in the housing 114 by projecting lugs 136 formed near the lower edges of the longitudinal lateral faces 138 of the housing 114, which lugs are chamfered in order to allow the connector 10 to be mounted by snap-fitting, by the elastic bending of the longitudinal lateral uprights of the frame, and which engage with complementary notches 139 in the lateral faces 20 of the insulating body 12.

The notches 139 are slightly inclined to the horizontal, as are the lugs 136, so as to absorb the clearances in the vertical direction.

The flexibility of the lateral uprights 138 of the frame allows these clearances to be absorbed. Thus, a slight horizontal, non-functional, clearance (not illustrated in the figures) may thus remain in the transverse direction between the opposing faces 20 and 138. This absorption of the clearances is useful for guaranteeing good coplanarity between the connection tabs or output terminals 34 of the connector 10 and those of the switch, which belong to two separate components joined together in the assembly 100.

The rear external transverse lateral face 140 and the front external transverse lateral face 142 of the frame 116 have crenels 144 allowing access to the connection tabs 34 for the reflow soldering operations using an infrared beam and/or for visual inspection of the soldered joints and/or for electrical test operations.

The reinforcing wing 122 is solid, whereas the other wing 124 has a window 146 and, on its lower face, has a stud 148 for positioning the body 102 on a printed-circuit board.

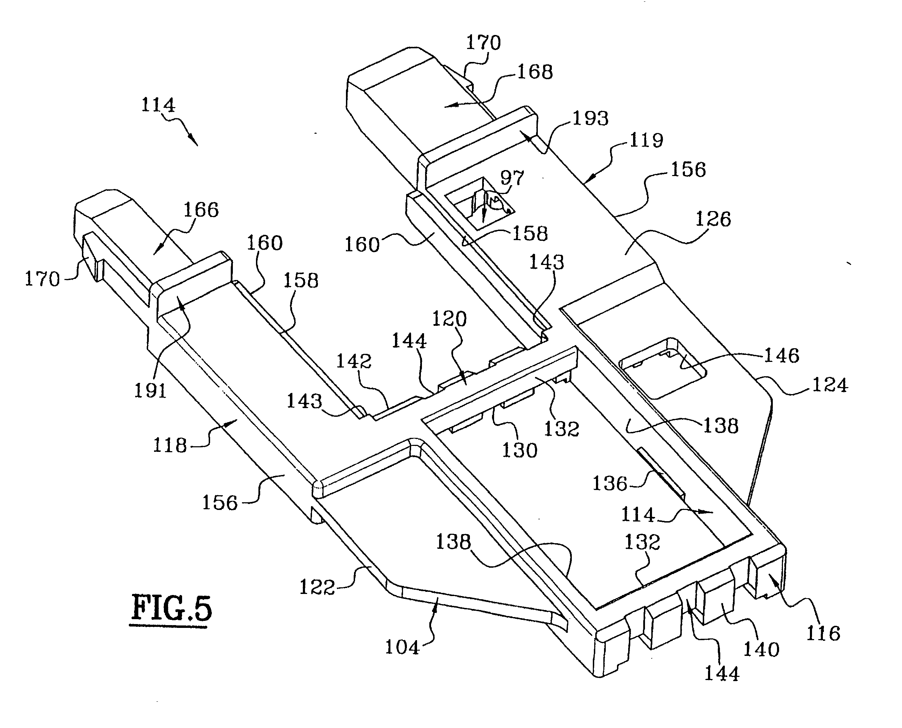

If it were desired to use a connector 10 having four pairs of contact blades 14, all that is required is to make a housing 114 with a larger transverse dimension by widening it towards the left in Figure 5, that is to say by "encroaching" on the wing 122, without increasing the overall width of the assembly.

A second positioning stud 150 is formed on the lower face 128 of the longitudinal branch 118 of the front section, which is a solid branch of rectangular cross section like the branch 119, the lower face of which has a housing 152 which houses, in a general arrangement known from document WO-A-95/33243, a switch 88 for detecting the presence and the end of insertion travel of a card in the active position.

The switch 88, for example of the normally open type, is incorporated into the body 102, being located here, for example, to the right of the connector 10. Its body 90 is fitted and hot-crimped in the housing 152 and it comprises a pedal 96 for actuating the switch 88, the branch 119 having a hole 97 through which the pedal 96 passes, while the tabs 92 for electrically connecting the switch 88 to the printed-circuit board are accessible through the window 146 in the reinforcing wing 124.

The total width or overall transverse size of the assembly 100 is particularly small and it corresponds to the distance separating the external longitudinal lateral faces 156 of the branches 118 and 119, which are vertical plane faces, while their opposing internal longitudinal lateral faces 158 each have a longitudinal rail 160 for guiding the carriage 108 in its sliding movement.

The U-shaped front section 117, comprising the branches 118 and 119, is thus open longitudinally towards the front in order to allow the ejection carriage 108, to be inserted into it rearwards from the front.

The carriage 108 is thus mounted so as to slide and be imprisoned in a chamber bounded longitudinally towards the rear by the external transverse face 142 of the crosspiece 120 and towards the front by the vertical plane of the rear transverse face 161 of the front part 104 forming the end-piece, which is a hollow moulded piece having two lateral housings 162 and 164 which are open longitudinally towards the rear, each housing accommodating a free end section 166, 168 of complementary cross section of a branch 118, 119, respectively, the cross sections being different in order to form means for polarizing the direction in which the end-piece 106 is mounted.

The two lateral housings 162 and 164 give the end-piece 106 a box structure so as to make it mechanically stiff, since the thicknesses of its various walls and partitions are very small in order to reduce the overall size of the assembly 100.

The stiffness thus obtained makes it possible, after assembly by snap-fitting the front part 106 over the rear part 104, to stiffen the U-shaped piece consisting of the two longitudinal branches 118 and 119 and thus to guarantee that the carriage slides properly and to prevent deformation phenomena, for example caused by the temperature during the soldering operations.

The front part 106 thus constitutes an end-piece which is retained in position by snap-fitting means, namely by lugs 170 and notches 172.

Between the two housings 162 and 164, the front end-piece 106 has a central cavity 174 of larger dimensions, which is also open longitudinally towards the rear and is closed by the vertical transverse wall 176.

This cavity in particular receives the front portion 182 of the carriage 108 in its sliding movement, the rear portion 180 of the carriage 108 constituting the guiding portion between the branches 118 and 119.

The rear portion 180 of the carriage 108 is a solid portion having the overall shape of a solid rectangular parallelepiped, which is bounded transversely by two vertical lateral faces 184, each of which has a longitudinal slideway 186 having a shape complementary to a rail 160 on the rear section 117 of the rear part 104 of the body 102 so as to guide the carriage 108 in its sliding movement and to ensure its vertical retention in both directions with respect to the branches 118 and 119.

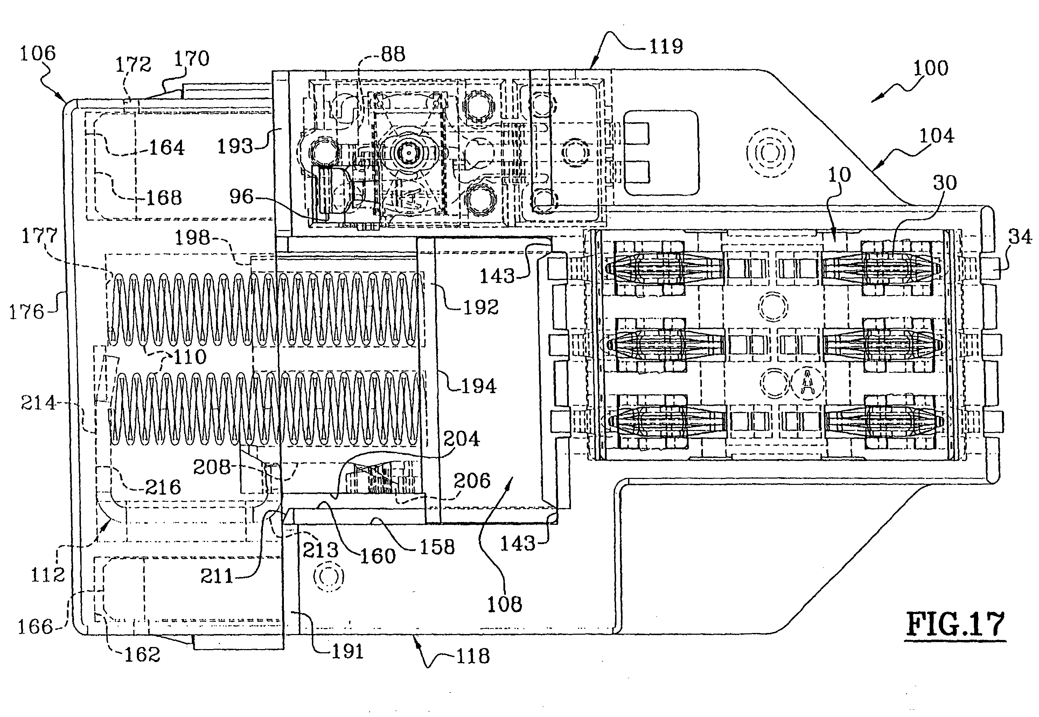

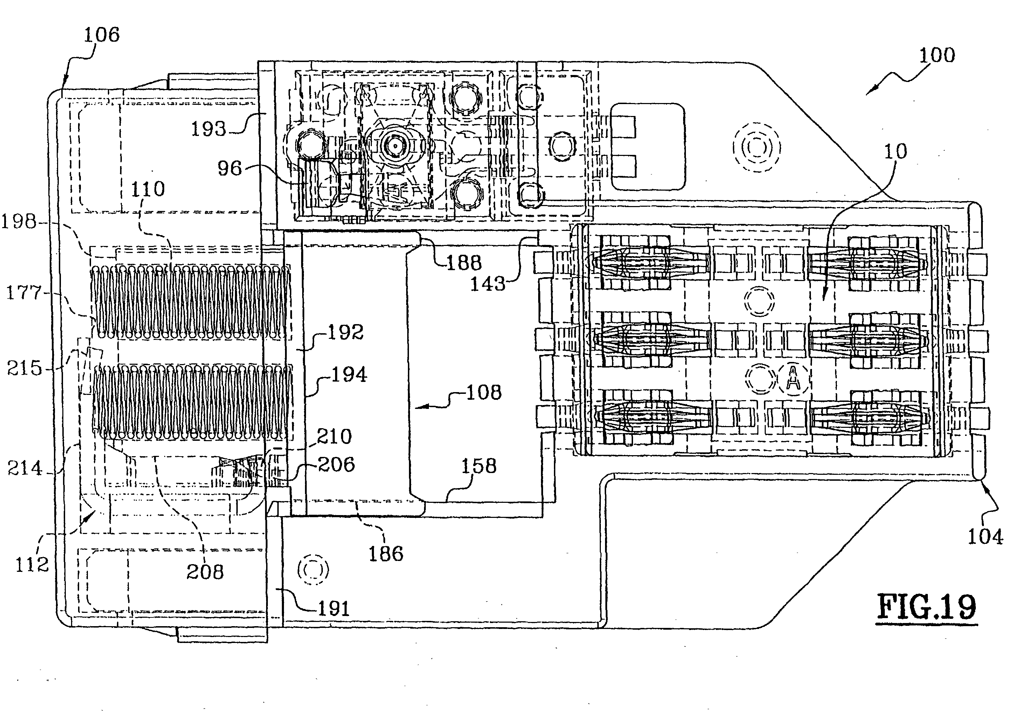

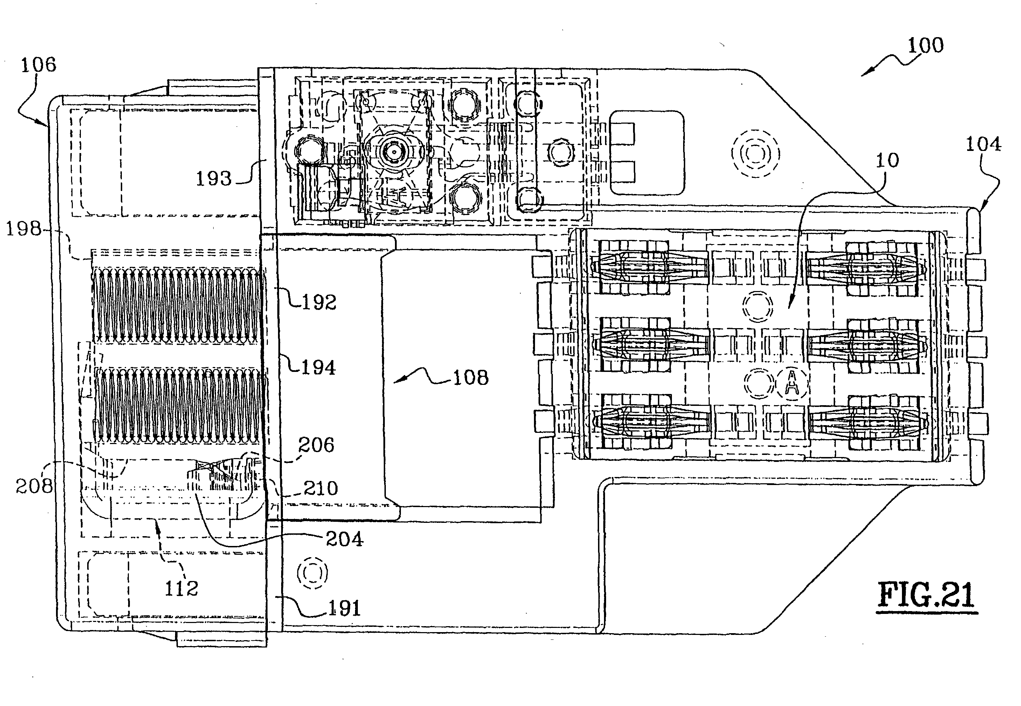

The rear portion 180 of the carriage 108 is bounded by rear stops 188 which are able to bear longitudinally rearwards against facing parts 143 of the front transverse face 142 of the crosspiece 120 (see Figure 17) in order to define the rear longitudinal rest position of the carriage 108 with respect to the body 102, 104, 120.

The stops 188 are offset longitudinally rearwards with respect to the rear transverse face 189 of the rear portion of the carriage 108 in order to form a recess for the output terminals 34 of the front row of contact blades 14 and to allow the presence of a certain volume of solder on the corresponding contact pads on the printed-circuit board.

When in position mounted in the body 102, the upper face 190 of the rear portion 180 of the carriage 108 is flush with the upper face 126 of the branches 118 and 119 of the rear part 104 of the body 102 and it includes a transverse stop plate 192 which extends vertically upwards above the upper face 190 and the rear transverse vertical face 194 of which constitutes the surface with which the front transverse edge of the card is able to engage in order, on the one hand, to drive the carriage 108 longitudinally forwards when the card is inserted and, on the other hand, to allow the card to be ejected.

The height of the plate 192, like that of the fixed stop plates 191 and 193 of the branches 118 and 119, is slightly greater than the maximum thickness of the smart card, i.e. of the order of approximately 1 mm, so that the thrust forces produced by the card on the carriage 108 are well distributed.

Longitudinally towards the front, beyond the plate 192, the carriage 108 is extended by a front portion 196 having the overall shape of a rectangular parallelepiped, the profile and the dimensions of which are complementary to those of the cavity 174 in the end-piece 106 so as, by sliding longitudinally, to be accommodated therein.

The front portion 196 is bounded longitudinally towards the front by a transverse face 198 into which two cylindrical housings 200 run, each housing accommodating one of the two return springs 110, each of which is a helical compression spring whose rear longitudinal end bears against the end wall 202 of a housing 200 and whose front longitudinal end bears against the internal transverse face 177 of the rear transverse partition 176 forming the end wall of the end-piece 106.

Two compression springs 110 are preferably used for applying a force, of the order of 8 N, to the carriage 108 sufficient to overcome the friction internal to the assembly, the external friction applied, for example, to the card by its guiding means in the equipment as well as the friction of the card on the ends 30 of the contact blades. This sufficient force is thus obtained while minimizing the diameter, in this case equal to approximately 2.4 mm, and the length of the springs 110 so as to minimize the overall size of the front part of the assembly.

The carriage 108 is placed approximately along the longitudinal axis of the insulating body 12 of the connector 10 and the two compression springs 110 are placed, approximately symmetrically with respect to the longitudinal axis, facing it so as to balance the insertion forces exerted by the user and the ejection forces applied by the assembly to the card which, via its lower face, rubs against the curved upper ends 30 of the six contact blades 14.

The housings 200 for the two springs 110, are each open vertically upwards and downwards so as to limit the overall height or thickness of the front portion 182 of the carriage 108 to approximately the value of the diameter of the springs 110, i.e. to approximately 2.4 mm in the example shown.

The front portion 196 is bounded laterally by two vertical transverse faces 204 and 205 which each extend, in the mounted and rest position of the carriage 108, opposite the facing portion of the internal longitudinal lateral faces 158, 160 of the branches 118 and 119.

The lateral face 205 is slidingly received with a small transverse clearance so as to face the vertical lateral face 210 of the cavity 174, while the lateral face 204 has a large transverse clearance so as to face the vertical lateral face 208 of the cavity 174 in which a longitudinal groove 212 is formed, transversely towards the outside, the active main strand of the locking hook 112, for the transverse and vertical movement of the locking hook, being housed therein.

The sliding of the lateral face 205 of the carriage along the lateral face 210 of the cavity 174 in the end-piece 106 makes it possible, in the working position, to prevent the carriage from pivoting inopportunely, due mainly to the second spring which does not bear on the locking hook, about a vertical axis perpendicular to the plane of sliding of the card and in the clockwise direction with regard, for example, to Figure 17. This pivoting effect could also be reduced by lengthening, not shown, the mounting strand 214 of the locking hook so that it is held longitudinally pressed by the two springs.

The lateral face 204, which is oriented longitudinally and vertically, thus extends in a plane perpendicular to the general plane of the card, i.e. in a plane perpendicular especially to the coplanar upper faces 190 of the carriage 108, 126 of the body 102 and 16 of the connector 10.

The lateral face 204 includes the generally heart-shaped locking cam 206, the design of which is known, for example, from document WO-A-96/02893.

The cam 206 is extended longitudinally towards the front by a groove or channel 208, the assembly formed by the cam and the channel being able to receive, by displacement, the rear free end 210 of the main strand 212 of the locking hook 112 with respect to which the rear free end 210 is bent approximately through 90° transversely inwards in order to form the locking nose which engages with the cam 206.

The front free end 214 of the main strand 212 of the locking hook 112 is also a strand, of longer length, which is bent transversely inwards through approximately 90° and which extends in the same plane as the nose 210, in order to form a strand for mounting, retaining and hinging the locking hook 112 with respect to the body 102, and more specifically with respect to the front end-piece 106.

As may be seen for example in Figure 17, the mounting strand 214 is housed in a complementary housing 216 formed in the internal transverse face 177 of the end wall 176 of the end-piece 106.

The mounting and hinging strand 214 is kept longitudinally pressed forwards against the end wall of the housing 216 by the front longitudinal end of one of the two return springs 100 (see Figure 17).

The locking hook 112, and therefore the nose 210, may thus pivot about an axis perpendicular to the direction I, and the hook 112 and the locking nose 210 are permanently urged elastically and transversely inwards, towards the locking cam 206 formed in the face 204, by the force exerted by this spring on the slightly rearwardly curved shaped piece 215 of the strand 214.

The profile of the cam 206 has, in a known manner, a section 294 with a first ramp 296, for introducing the locking nose 210, and then a section 298, which is separated from the insertion section 294 by a ramp 300, for retaining the locking nose 210.

Finally, the profile of the locking cam has a section 302 for the escape of the locking nose 210, which section 302 is separated from the retention section 298 by a ramp 304 and itself has an escape ramp 306.

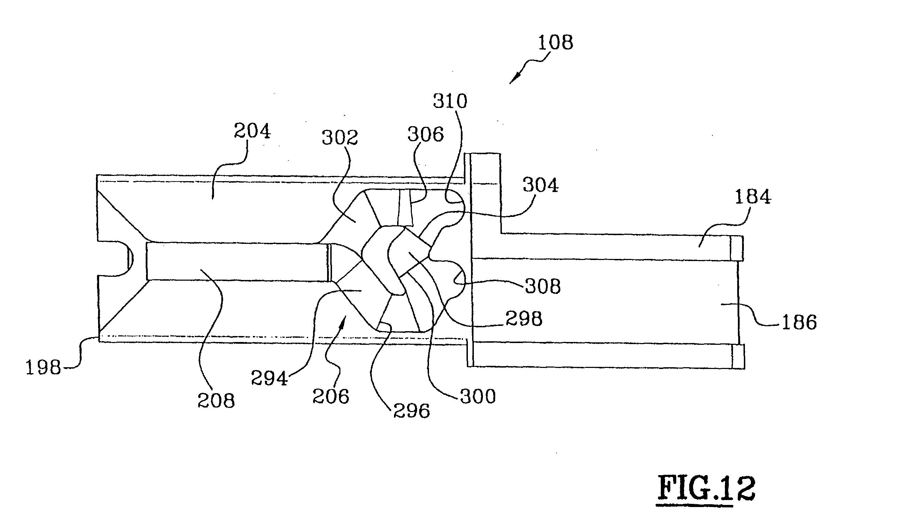

Towards the left in Figure 12, the insertion section 294 and the escape section 302 each have a stop wall, respectively 308, 310, for the locking nose 210.

For the operation of the locking means involving the hook 112 and the cam 206, reference may be made to the detailed description of these which is given in document WO-A-96/02983.

During the displacement travel of the carriage 108 from the right to the left in Figure 17, the locking nose 210, after having travelled along the groove 208, reaches the position at the start of the insertion section 294.

It then passes over the ramp 296 until reaching the wall 308.

These displacements of the carriage 108 are made against the return force exerted by the springs 110.

The user, who has felt that the locking nose 210 has butted against the wall 308, then releases his thrusting action on the rear transverse edge of the card.

Due to the effect of the return springs 110, the carriage 108 is elastically returned from the left to the right.

The locking nose 210 then moves to the position in which it drops into the notch-shaped retention section 298.

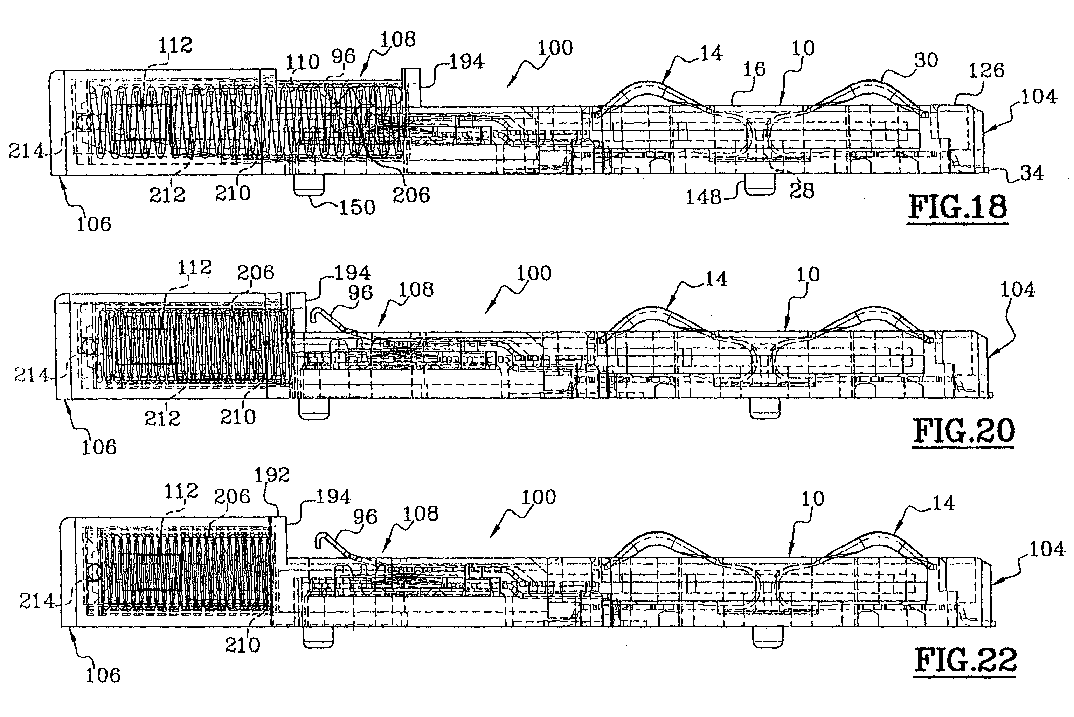

In this position, called the "working" position or "operating" position, the carriage 108 is locked in its operating position illustrated in the Figures 19 and 20.

During the first displacement phase of the carriage 108 against the springs 110, the front transverse edge of the card engages with the pedal 96 which controls the switch 88 for detecting the presence of the card in the operating position.

The positioning of the switch 88 in the body 102, 104 and of the locking cam 206 of the carriage 108, as well as the distance between the position of the hook in the notch 298 and the positions of the hook against the end walls 308 and 310, are such that they prevent any spurious electrical pulse during the overtravel phase during insertion and extraction of the card.

The operating sequence of the switch 88 is as follows. During insertion of the card, the contact blades 14, 30 engage with the contact pads on the card in order to establish electrical contacts for signals, and then the switch is activated during the displacement of the hook in the ramp 296. The switch is deactivated only during the displacement of the hook in the escape section 302.

This sequence is compatible with all the possible positioning scenarios for the contact pads on the card, as are defined by the ISO 7816 standard.

The unlocking of the carriage 108 takes place by pushing, from the right to the left in Figure 19, on the rear transverse edge of the card against the return force applied by the springs 110.

The locking nose 210 then moves, within the locking cam 206, over an overtravel of approximately 0.5 mm into the position illustrated in Figures 21 and 22, during which displacement it gets past the ramp 304.

Optionally, this displacement may continue until the locking nose 210 butts against the end wall 310.

The small amount of unlocking overtravel is always less than the available length portion of the contact pads so as to guarantee that no interruption in the electrical connection occurs during the unlocking overtravel.

The user then releases the thrust force that he had just applied to the rear transverse edge of the card and the unlocking nose 210 disengages from the locking cam 210 by passing from the position in Figures 21 and 22 to the next position by getting past the ramp 306, the carriage 108 being freely and elastically returned by the compression springs 110 to its rest position illustrated especially in Figures 17 and 18, in which position it is in longitudinally rearward abutment.

In order to avoid inopportune ejection of the card when the carriage 108 reaches the rear stop, it is possible to incorporate braking means (not illustrated) in the equipment which receives the assembly 100, the braking effect thus obtained adding to the braking effect resulting from the friction of the contact blades 14 on the lower face of the card.

It will be noted that the permanent elastic urging of the locking nose 210 by the spring 110 bearing on the slightly curved shaped piece 215 of the strand 214 prevents any accidental escape of the locking nose 210 and therefore any accidental release of the carriage 108, whatever the orientation in space of the assembly 100, as well as in cases in which the assembly 100 is mounted in equipment subjected to vibrations, impacts or shaking.

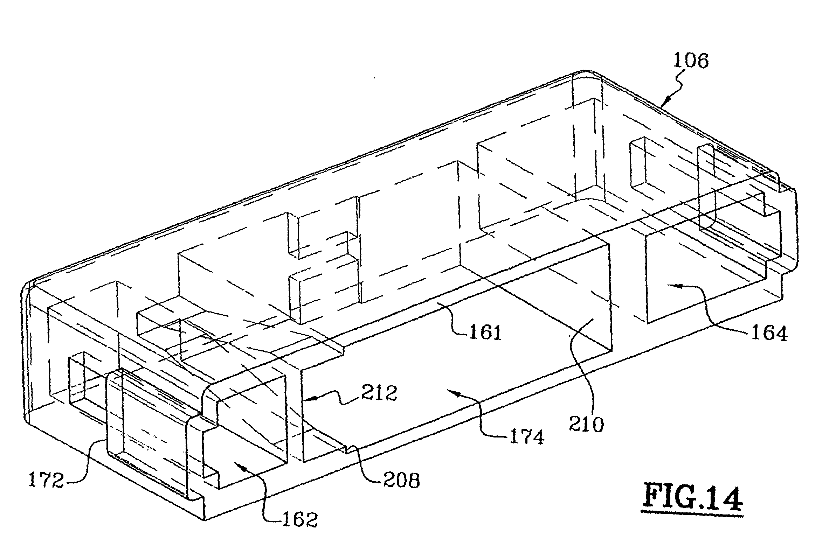

As may be seen especially in Figure 14, the inner front corner 211 of the branch 118 constitutes a rearward fixed mechanical stop for the facing sharp bend 213 of the locking hook. This stop makes it possible to keep the hook longitudinally in place in its housing in the end-piece and thus to prevent it from moving backwards with any mobile equipment.

Three forward longitudinal stop means may be distinguished.

in normal use with a card, the mechanical longitudinal stop determining the most forwardly inserted position of the card which pushes the carriage 108 consists of the plates 191 and 193 of the branches 118 and 119. The rear faces of the plates 191 and 193 are thus approximately aligned transversely with that face 194 of the movable stop plate 192 of the carriage 108 when the latter is in the overtravel position.

In the absence of a card, and especially should the carriage 108 be manipulated awkwardly, the rearward longitudinal retention of the latter is provided by second stop means which consist of the rear edge of the nose 210 of the locking hook 112 which then bears against the stop walls 308 and 310.

Finally, the third safety stop means consist of the rear transverse face 161 of the end-piece 106, against which face the front transverse face of the stop plate 192 of the carriage 108 bears. This stop also limits the pivoting of the carriage 108 about a vertical axis perpendicular to the plane of sliding of the card in the anticlockwise direction when a very large longitudinal force is exerted forwards on the carriage 108, 192, since the second stop means mentioned above are exerted only on one side of the longitudinal branch 118.

In normal use, only the first stop means 191, 193 are involved and their longitudinal position is such that it allows the locking nose 210 to engage in the retention section 298 of the cam 206 and to disengage therefrom.

All the views of the drawings show an operating clearance between the pieces which slide with respect to one another in order to allow proper operation of the mechanism.

In order for the illustrations to be more easily drawn and to be understood, the ways in which the clearances in the various directions close up, depending on the direction in which the forces are applied, which reverses between insertion of the card and ejection of the card, have not been shown.

It may be readily understood that the user can carry out the operations of insertion and extraction of the card C very simply and almost blind.

For the user, insertion conventionally takes place by inserting the card and then pushing the carriage 108 against the springs 110 until terminating in the final locking by the nose 210 according to a so-called "push-on" action.

The card may be extracted blind, according to a so-called "push-off" action, the user having simply to find, by feel, the rear transverse edge of the card which protrudes very slightly from the equipment and then exerting a slight forward push on the card, the releasing of the push force causing the card to be automatically expelled with the carriage 108.

The positioning, insertion and extraction of the card therefore take place, from the user's standpoint, using a simple pushing movement of the card and therefore without extensive gripping of the card needed for any extraction.

This function makes it possible to dispense with the members and other card-ejecting means which are provided for this purpose in appliances housing conventional connectors. It is thus possible to meet the miniaturization requirements of these appliances, such as cellular telephones for example, and to do so without increasing the cost of the "connector" payment.

The design of the assembly according to the invention is particularly advantageous in that it allows the assembly to be produced in the form of a single component of small dimensions, especially its thickness, in which are combined, in the form of added modular elements, particularly the functions of electrical connection and of detection of the presence and end of insertion travel of a card, it being possible for this assembly to be fitted very easily into an appliance, for example by fixing it onto a printed-circuit board, or any other component.

The small dimensions and the small overall size of the assembly 100 allow it to be packaged in tape form, in the same manner as conventional connectors, and to be positioned by automatic pick-and-place machines by virtue of the gripping surface available on the upper face 190 of the carriage 108 in the rest position, which is close to the centre of gravity of the assembly 100. The positioning and soldering are carried out with the carriage in the rest position in order to avoid excessively high mechanical stresses applied by the compression springs 110 in the considerable thermal heat-up phase during infrared reflow.

The second embodiment will now be described, in which components and elements identical, similar or analogous to those described above are denoted by the same reference numbers.

In this second embodiment, the main difference over the previous embodiment is that the insulating body 12 forming the contact holder of the connector 10 is moulded as a single piece with the rear part 104 of the body of the assembly 100.

Moreover, the means for detecting the presence of a card and for detecting the end of insertion of the card consist of a switch of the normally closed type, having an elongate blade 400 forming a moving contact which is mounted so as to slide longitudinally in both directions with respect to the single piece 12, 104 and which is capable of engaging, depending on the longitudinal position of the carriage 108 which drives it in both directions during its displacements with respect to the rear part 104, with the two fixed contacts 402 and 404 carried by the plastic part adjacent to the insulating body 12 and which connects the latter to the lateral branch 119.

The two fixed contacts, namely the rear fixed contact 402 and the front fixed contact 404, are overall of the same type as the signal contact blades 14 and are mounted in the insulator in the same manner, that is to say by longitudinal insertion. Each of the two switch contacts 402 and 404 has a tab 406 for connecting it to the printed-circuit board. The curved end 408, 409 of each fixed contact 402 and 404 protrudes upwards out of the plane of the upper face 126 so as to engage with the lower facing face of the moving contact 400 in the form of a plane horizontal strip, the transverse width of which corresponds approximately to that of the curved contact ends of the fixed contacts 402 and 404.

The front longitudinal end of the moving contact 400 includes two tabs 410 for fastening it, for the purpose of its entrainment, in a slot 412 formed in the upper face 190 of the rear part 180 of the carriage 108, while its rear longitudinal end includes two tabs 414 for guiding it in longitudinal translation in complementary grooves in the upper face 126, 16 of the piece 12, 104.

All the other elements and components of the assembly 100 are generally similar to those described previously and their operation is identical.

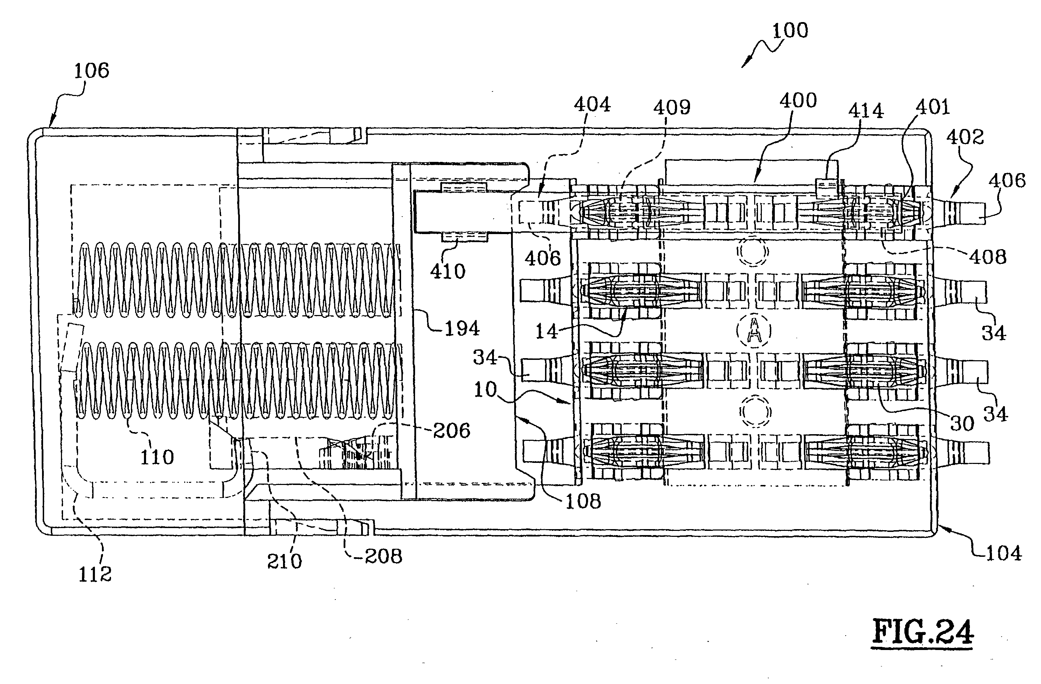

In the rear, rest position of the carriage 108, illustrated in Figure 24, the moving contact blade 400 is simultaneously in contact with the curved free ends, in the flexed position, of the two fixed contacts 402 and 404 so as to establish an electrical circuit between these two contacts.

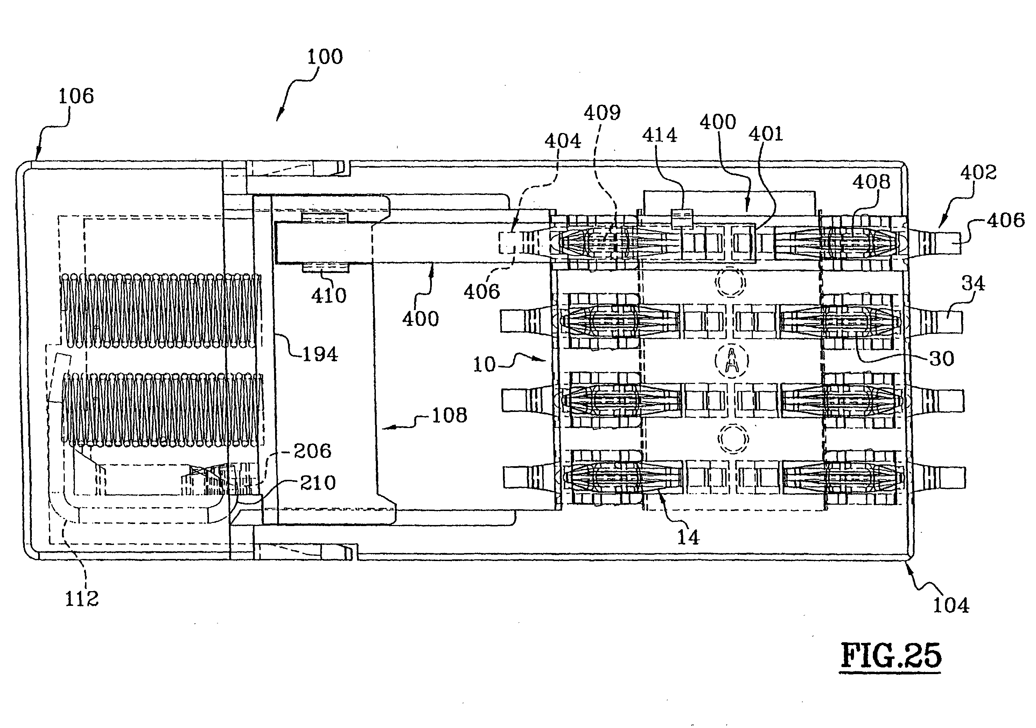

When the carriage 108 has reached its working or operating position illustrated in Figure 25, the moving contact blade 400 is now in contact only with the single front fixed contact 404 and the electrical switching circuit between the two fixed contacts 402 and 404 is broken.

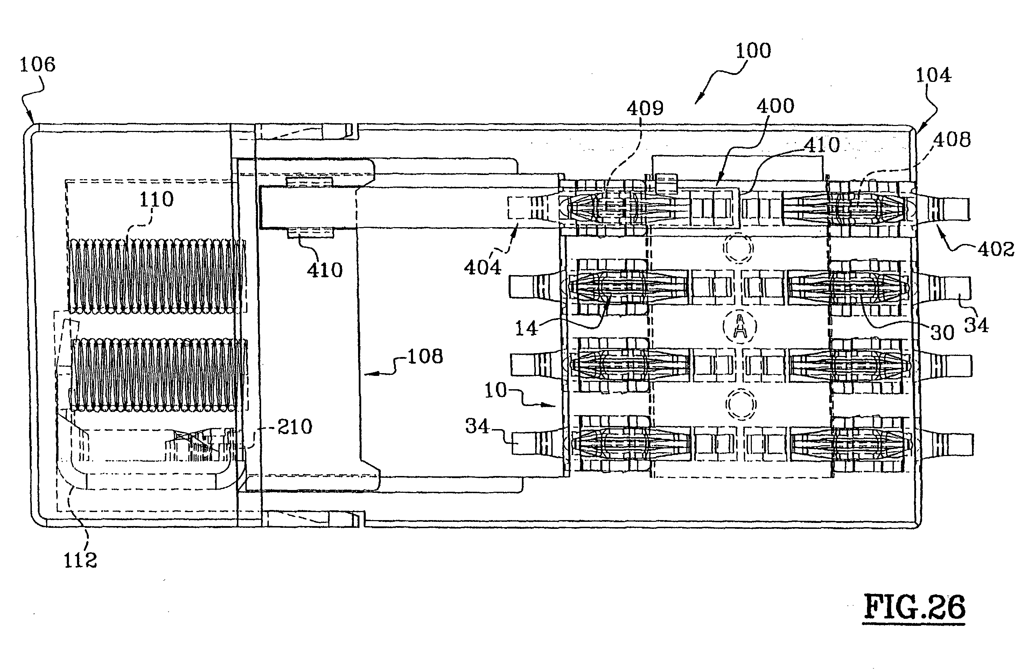

The same applies in the overtravel position illustrated in Figure 26, and the switching circuit is only re-established during the rest return travel, during which the rear transverse edge 401 of the moving contact 400 again comes into electrical contact with the front part, protruding above the upper face 126, of the rear fixed contact 402.

It will be noted that, in all cases and in all embodiments, the switch does not change state during the overtravel phase.

## Claims

1. Assembly (100) for the connection of a smart card, having, on one of its main faces, electrical contact pads connected to an integrated circuit in the card, of the type comprising a body (102, 104, 106), one face (126) of which allows access to a carriage (108) for accommodating the card and which can slide longitudinally along the body between a rear, rest position, in which the card can be placed on the carriage (108), or extracted, and a forward, operating position, in which the electrical contact pads on the card interact with the electrical contact elements (14) of an electrical connector (10) placed in the body (104, 114, 116), of the type comprising stop means (188, 143), for delimiting the rest position of the latter, and means (112, 210, 206) for locking the carriage (108) in the operating position, and of the type in which the carriage (108) is returned elastically to its rest position, the said means for locking the carriage (108) in the operating position, against the elastic return force (110) of the carriage (108),
- being of the type which is triggered automatically when the carriage (108) reaches its operating position and of the type in which the release is caused by forward movement of the carriage (108), against the elastic return force, beyond its operating position,
- and including a locking hook (112, 210) carried by the body (106), an end nose (210) of which hook, when the carriage (108) is near its operating position, engages with a locking cam (206) formed opposite it in the carriage (108),
**characterized in that** the end nose (210) of the locking hook (112) extends transversely in a direction parallel to the plane in which the card and the carriage (108) slide and **in that** the locking cam (206) is formed in a surface portion (204) of the carriage (108) perpendicular to the plane of sliding.

2. Assembly according to the preceding claim, **characterized in that** the locking cam (206) has a section for insertion of the locking nose, a section for retention of the locking nose, which determines the operating position of the carriage (108), and a section for releasing the locking nose.

3. Assembly according to Claim 2, **characterized in that** the locking cam (206) has an approximately heart-shaped profile.

4. Assembly according to any one of the preceding claims, **characterized in that** the locking hook (112) is an elongate element (212) which extends approximately along the direction (I) of sliding of the carriage (108), a free end (210) of which is bent through 90° in order to form the locking nose, and which is able to pivot in order to allow the locking nose to engage in and escape from the locking cam (206).

5. Assembly according to Claim 4, **characterized in that** the locking hook (112) is an element consisting of a bent metal wire.

6. Assembly according to any one of the preceding claims, **characterized in that** the locking nose (206) is urged elastically towards the locking cam (206).

7. Assembly according to any one of the preceding claims, **characterized in that** the carriage (108) includes a stop (192, 194) for positioning the card, which engages with a transverse edge of the card which extends in a direction perpendicular to the direction (I) of sliding of the carriage (108).

8. Assembly according to any one of the preceding claims, **characterized in that** the means for the elastic return of the carriage (108) to its rest position comprise at least one compression spring (110) placed between bearing surfaces (202) formed on the carriage (108) and on the body (106, 177).

9. Assembly according to any one of the preceding claims, **characterized in that** the body (102) is made in two parts, a front part (106) and a rear part (104), which are joined together in the longitudinal direction in order to emprison the carriage (108).

10. Assembly according to the preceding claim, **characterized in that** the rear part (104) of the body includes a front section (117, 118, 119) in the form of a U open longitudinally towards the front for insertion of the carriage (108) which is slidingly guided between the two opposed, longitudinally oriented, horizontal lateral branches (118, 119) of the front section (117), which branches are joined together by a transverse branch (120) which includes the means for stopping the carriage (108) in the rest position, and **in that** the front part (106) of the body (102) constitutes a closure end-piece which is fitted over the front free ends (162, 164) of the said branches (118, 119).

11. Assembly according to the preceding claim taken in combination with Claim 8, **characterized in that** the front free end of the said compression return spring (110) bears longitudinally against a surface (177) formed in the front part (106, 176) of the body forming the end-piece.

12. Assembly according to either of Claims 9 and 10, **characterized in that** the front part (106) of the body is fitted over the rear part (104) by snap-fitting (170, 172).

13. Assembly according to any one of Claims 10 to 12, **characterized in that** the carriage (108) has a rear portion (180) for guiding and for stopping, and a front portion (182) bounded transversely outwards by two longitudinally oriented vertical lateral faces (204, 206) in one of which the said locking cam (206) is formed.

14. Assembly according to any one of Claims 10 to 12 taken in combination with either of Claims 4 and 5, **characterized in that** the rear free end (214) of the elongate element forming the hook (112) is bent through 90° transversely inwards in order to form the said locking nose and **in that** its front free end is extended transversely inwards by a mounting and hinging branch (214).

15. Assembly according to the preceding claim taken in combination with Claim 8, **characterized in that** the said mounting and hinging branch (214) of the elongate element (112) is interposed between the front free end of the return spring and the said surface (177) formed in the front part (106) of the body forming the end-piece.

16. Assembly according to any one of Claims 10 to 14, **characterized in that** the rear section of the rear part (106) of the body includes a housing (114) which accommodates the connector (10), in which housing the latter is mounted in the vertical direction.

17. Assembly according to the preceding claim, **characterized in that** the housing and the insulating body (12) forming the contact holder of the connector (10) include complementary stop means (84, 130) for determining the vertical position of the connector (10) with respect to the body and complementarily shaped elastically deformable means (136, 139) for vertical retention of the abutted connector in its housing.

18. Assembly according to any one of the preceding claims, **characterized in that** it includes a switch, of the normally open or normally closed type, for detecting the presence of a card and the end of insertion travel of the latter, which switch does not change state when the carriage undergoes, in both directions, the overtravel beyond the said operating position.

## Patentansprüche

1. Anordnung (100) für den Anschluss einer Smart Card, welche auf einer ihrer Hauptflächen elektrische Kontaktstreifen (englisch: contact pads) aufweist, die mit einem integrierten Schaltkreis in der Karte kontaktiert sind, von dem Typ, welcher einen Körper (102, 104, 106) aufweist, dessen eine Fläche (126) einen Zugang zu einem Schlitten (108) zum Aufnehmen der Karte freigibt, und der sich in Längsrichtung entlang dem Körper zwischen einer hinteren Ruheposition verschieben kann, bei der die Karte auf den Schlitten (108) aufgelegt oder entnommen werden kann, sowie einer vorderen Betriebsposition, bei welcher die elektrischen Kontaktstreifen auf der Karte mit den elektrischen Kontaktelementen (14) eines elektrischen Verbinders (10) zusammenwirken, welcher in dem Körper (104, 114, 116) angeordnet ist, und der von dem Typ ist, welcher Anschlagmittel (188, 143) zum Begrenzen der Ruheposition des letzteren aufweist, sowie Mittel (112, 210, 206) zum Verriegeln des Schlittens (108) in der Betriebsposition, und von dem Typ, bei welchem der Schlitten (108) elastisch in seine Ruheposition zurückgestellt wird, wobei die genannten Mittel zum Verriegeln des Schlittens (108) in der Betriebsposition gegen die elastische Rückstellkraft (110) des Schlittens (108)
- von dem Typ sind, welche automatisch betätigt werden, wenn der Schlitten (108) seine Betriebsposition erreicht, und von dem Typ, bei welchem das Lösen durch eine Vorwärtsbewegung des Schlittens (108) über dessen Betriebsposition hinaus gegen die elastische Rückstellkraft bewirkt wird,
- und einen Verriegelungshaken (112, 210) umfassen, welcher von dem Körper (106) gehalten wird, wobei eine Endnase (210) von diesem Haken dann, wenn der Schlitten (108) sich nahe seiner Betriebsposition befindet, in Eingriff mit einem Verriegelungsnocken (206) kommt, der dieser gegenüberliegend in dem Schlitten (108) ausgebildet ist,
**dadurch gekennzeichnet, dass** die Endnase (210) des Verriegelungshakens (112) sich quer in einer Richtung parallel zu der Ebene erstreckt, in welcher die Karte und der Schlitten (108) sich verschieben, und dass der Verriegelungsnocken (206) in einem Flächenabschnitt (204) des Schlittens (108) ausgebildet ist, welcher senkrecht zu der Ebene der Verschiebung liegt.

2. Anordnung nach dem vorangehenden Anspruch, **dadurch gekennzeichnet, dass** der Verriegelungsnocken (206) einen Abschnitt für das Einführen der Verriegelungsnase, einen Abschnitt zum Festhalten der Verriegelungsnase, welcher die Betriebsposition des Schlittens (108) bestimmt, und einen Abschnitt zum Freigeben der Verriegelungsnase hat.

3. Anordnung nach Anspruch 2, **dadurch gekennzeichnet, dass** der Verriegelungsnocken (206) ein annähernd herzförmiges Profil hat.

4. Anordnung nach einem der vorangehenden Ansprüche, **dadurch gekennzeichnet, dass** der Verriegelungshaken (112) ein längliches Element (212) ist, welches sich annähernd entlang der Richtung (1) der Verschiebung des Schlittens (108) erstreckt, wobei ein freies Ende (210) desselben um 90° abgebogen ist, so dass es die Verriegelungsnase bildet, und welches zu einer Verschwenkung in der Lage ist, um zu ermöglichen, dass die Verriegelungsnase mit dem Verriegelungsnocken (206) in Eingriff bzw. außer Eingriff kommt.

5. Anordnung nach Anspruch 4, **dadurch gekennzeichnet, dass** der Verriegelungshaken (112) ein Element ist, welches aus einem gebogenen Metalldraht besteht.

6. Anordnung nach einem der vorangehenden Ansprüche, **dadurch gekennzeichnet, dass** die Verriegelungsnase elastisch zu dem Verriegelungsnocken (206) hin gedrückt wird.

7. Anordnung nach einem der vorangehenden Ansprüche, **dadurch gekennzeichnet, dass** der Schlitten (108) einen Anschlag (192, 194) zum Positionieren der Karte hat, welcher zur Anlage an einer Querkante der Karte kommt, die sich in einer Richtung senkrecht zu der Richtung (1) der Verschiebung des Wagens (108) erstreckt.

8. Anordnung nach einem der vorangehenden Ansprüche, **dadurch gekennzeichnet, dass** die Mittel für die elastische Rückstellung des Schlittens (108) in seine Ruheposition wenigstens eine Druckfeder (110) umfasst, die zwischen Lagerflächen (202) angeordnet ist, die an dem Schlitten (108) und an dem Körper (106, 177) ausgebildet sind.

9. Anordnung nach einem der vorangehenden Ansprüche, **dadurch gekennzeichnet, dass** der Körper (102) zweiteilig ausgebildet ist, und zwar aus einem vorderen Teil (106) und einem hinteren Teil (104), die in der Längsrichtung so miteinander verbunden sind, dass sie den Schlitten (108) zwischen sich einschließen.

10. Anordnung nach dem vorangehenden Anspruch, **dadurch gekennzeichnet, dass** der hintere Teil (104) des Körpers einen vorderen Abschnitt (117, 118, 119) in der Form eines U umfasst, welches in Längsrichtung zu der Vorderseite hin zum Einsetzen des Schlittens (108) offen ist, der verschiebbar zwischen den beiden einander gegenüberliegenden, längs ausgerichteten horizontalen Seitenarmen (118, 119) des vorderen Abschnittes (117) geführt wird, wobei die Arme miteinander durch einen Querarm (120) verbunden sind, welcher die Mittel zum Stoppen des Schlittens (108) in der Ruheposition umfasst, und dass der vordere Teil (106) des Körpers (102) ein Schließ-Endstück bildet, welches auf die vorderen freien Enden (162, 164) der genannten Arme (118, 119) aufgesteckt wird.

11. Anordnung nach dem vorangehenden Anspruch in Kombination mit Anspruch 8, **dadurch gekennzeichnet, dass** das vordere freie Ende der Rückstell-Druckfeder (110) in Längsrichtung an einer Fläche (177) anliegt, die in dem vorderen Teil (106, 176) des den Körper bildenden Endstückes ausgebildet ist.

12. Anordnung nach einem der Ansprüche 9 und 10, **dadurch gekennzeichnet, dass** der vordere Teil (106) des Körpers mittels einer Schnapp-Passung (170, 172) auf den hinteren Teil (104) aufgesteckt ist.

13. Anordnung nach einem der Ansprüche 10 bis 12, **dadurch gekennzeichnet, dass** der Schlitten (108) einen hinteren Bereich (180) für die Führung und den Anschlag hat, sowie einen vorderen Bereich (182), welcher quer auswärts durch zwei längsgerichtete vertikale Seitenflächen (204, 205) begrenzt wird, wobei in einer derselben der Verrzegelungsnocken (206) ausgebildet ist.

14. Anordnung nach einem der Ansprüche 10 bis 12, in Kombination mit einem der Ansprüche 4 und 5, **dadurch gekennzeichnet, dass** das hintere freie Ende (210) des länglichen Elementes, welches den Haken (112) bildet, um 90° quer einwärts abgebogen ist, um die Verriegelungsnase zu bilden, und dass dessen vorderes freies Ende als Montage- und Scharnierarm (214) sich quer einwärts erstreckt.

15. Anordnung nach den vorangehenden Ansprüchen in Kombination mit Anspruch 8, **dadurch gekennzeichnet, dass** der Montageund Scharnierarm (214) des länglichen Elementes (112) zwischen dem vorderen freien Ende der Rückstellfeder und der Fläche (177) angeordnet ist, die in dem vorderen Teil (106) des das Endstück bildenden Körpers ausgebildet ist.

16. Anordnung nach einem der Ansprüche 10 bis 14, **dadurch gekennzeichnet, dass** der hintere Abschnitt des hinteren Teils (104) des Körpers ein Gehäuse (114) umfasst, welches den Verbinder (10) aufnimmt, wobei der letztere in diesem Gehäuse in vertikaler Richtung montiert wird.

17. Anordnung nach den vorangehenden Ansprüchen, **dadurch gekennzeichnet, dass** das Gehäuse und der den Kontakthalter des Verbinders (10) bildende Isolierkörper (12) komplementäre Anschlagmittel (84, 130) aufweisen, um die vertikale Position des Verbinders (10) mit Bezug auf den Körper zu bestimmen, sowie komplementär geformte, elastisch verformbare Mittel (136, 139) für eine vertikale Halterung des am Anschlag anliegenden Verbinders in seinem Gehäuse.

18. Anordnung nach einem der vorangehenden Ansprüche, **dadurch gekennzeichnet, dass** sie einen Schalter vom normalerweise offenen oder normalerweise geschlossenen Typ umfasst, um das Vorhandensein einer Karte sowie das Ende des Einführweges der letzteren zu erfassen, wobei der Schalter seinen Zustand nicht ändert, wenn der Schlitten in beiden Richtungen den Zusatzweg über die Betriebsposition hinaus ausführt.

## Revendications

1. Ensemble (100) pour le raccordement d'une carte à mémoire électronique comportant sur une de ses faces principales des plages de contact électrique reliées à un circuit intégré de la carte, du type comportant un corps (102, 104, 106) dont une face (126) donne accès à un chariot (108) de réception de la carte et qui peut coulisser longitudinalement sur le corps entre une position arrière de repos dans laquelle la carte peut être mise en place sur le chariot (108), ou extraite, et une position avant d'exploitation dans laquelle les plages de contact électrique de la carte coopèrent avec les éléments de contact électrique (14) d'un connecteur électrique (10) agencé dans le corps (104, 114, 116), du type comportant des moyens de butée (188, 143) pour délimiter la position de repos de ce dernier et des moyens (112, 210, 206) de verrouillage du chariot (108) en position d'exploitation, et du type dans lequel le chariot (108) est rappelé élastiquement vers sa position de repos, lesdits moyens de verrouillage du chariot (108) en position d'exploitation, à l'encontre de l'effort élastique de rappel (110) du chariot (108),
- étant du type à enclenchement automatique lorsque le chariot (108) atteint sa position d'exploitation et du type dont la libération est provoquée par déplacement du chariot (108) vers l'avant, à l'encontre de l'effort de rappel élastique, au-delà de sa position d'exploitation,
- et comportant un crochet de verrouillage (112, 210) porté par le corps (106) et dont un bec d'extrémité (210), lorsque le chariot (108) est au voisinage de sa position d'exploitation, coopère avec une came de verrouillage (206) formée en vis-à-vis dans le chariot (108),
**caractérisé en ce que** le bec d'extrémité (210) du crochet de verrouillage (112) s'étend transversalement selon une direction parallèle au plan de coulissement de la carte et du chariot (108), et **en ce que** la came de verrouillage (206) est formée dans une portion de surface (204) du chariot (108) perpendiculaire au plan de coulissement.

2. Ensemble selon la revendication précédente, **caractérisé en ce que** la came de verrouillage (206) comporte un tronçon d'introduction du bec de verrouillage, un tronçon de retenue du bec de verrouillage qui détermine la position d'exploitation du chariot (108), et un tronçon d'échappement du bec de verrouillage.

3. Ensemble selon la revendication 2, **caractérisé en ce que** la came de verrouillage (206) présente un profil sensiblement en forme de coeur.

4. Ensemble selon l'une quelconque des revendications précédentes, **caractérisé en ce que** le crochet de verrouillage (112) est un élément allongé (212) qui s'étend sensiblement selon la direction (I) de coulissement du chariot (108), dont une extrémité libre (210) est repliée à 90° pour constituer le bec de verrouillage et qui est susceptible de pivoter pour permettre l'engagement et l'échappement du bec de verrouillage dans et hors de la came de verrouillage (206).

5. Ensemble selon la revendication 4, **caractérisé en ce que** le crochet de verrouillage (112) est un élément en fil métallique plié.

6. Ensemble selon l'une quelconque des revendications précédentes, **caractérisé en ce que** le bec de verrouillage (206) est sollicité élastiquement en direction de la came de verrouillage (206).

7. Ensemble selon l'une quelconque des revendications précédentes, **caractérisé en ce que** le chariot (108) comporte une butée (192, 194) de positionnement de la carte qui coopère avec un bord transversal de la carte qui s'étend selon une direction perpendiculaire à la direction (I) de coulissement du chariot (108).

8. Ensemble selon l'une quelconque des revendications précédentes, **caractérisé en ce que** les moyens de rappel élastique du chariot (108) vers sa position de repos comportent au moins un ressort de compression (110) agencé entre des surfaces d'appui (202) formées sur le chariot (108) et sur le corps (106, 177).

9. Ensemble selon l'une quelconque des revendications précédentes, **caractérisé en ce que** le corps (102) est réalisé en deux parties avant (106) et arrière (104) assemblées selon la direction longitudinale pour emprisonner le chariot (108).

10. Ensemble selon la revendication précédente, **caractérisé en ce que** la partie arrière (104) du corps comporte un tronçon avant (117, 118, 119) en forme de U ouvert longitudinalement vers l'avant pour l'introduction du chariot (108) qui est guidé en coulissement entre les deux branches latérales horizontales opposées d'orientation longitudinale (118, 119) du tronçon avant (117) qui sont reliées entre elles par une branche transversale (120) qui comporte les moyens de butée du chariot (108) en position de repos, et **en ce que** la partie avant (106) du corps (102) constitue un embout de fermeture qui est assemblé sur les extrémités libres avant (162, 164) desdites branches (118, 119).

11. Ensemble selon la revendication précédente prise en combinaison avec la revendication 8, **caractérisé en ce que** l'extrémité libre avant dudit ressort de compression de rappel (110) prend appui longitudinalement contre une surface (177) formée dans la partie avant (106, 176) du corps formant embout.

12. Ensemble selon l'une quelconque des revendications 9 à 10, **caractérisé en ce que** la partie avant (106) du corps est assemblée sur la partie arrière (104) par emboîtement élastique (170, 172).

13. Ensemble selon l'une quelconque des revendications 10 à12, **caractérisé en ce que** le chariot (108) comporte une portion arrière (180) de guidage et de butée et une portion avant (182) délimitée transversalement vers l'extérieur par deux faces latérales verticales d'orientation longitudinales (204, 206) dans l'une desquelles est formée ladite came de verrouillage (206).

14. Ensemble selon l'une quelconque des revendications 10 à12 prise en combinaison avec l'une des revendications 4 ou 5, **caractérisé en ce que** l'extrémité libre arrière (214) de l'élément allongé formant crochet (112) est repliée à 90° transversalement vers l'intérieur pour constituer ledit bec de verrouillage, et **en ce que** son extrémité libre avant se prolonge transversalement vers l'intérieur par une branche de montage et d'articulation (214).

15. Ensemble selon la revendication précédente prise en combinaison avec la revendication 8, **caractérisé en ce que** ladite branche de montage et d'articulation (214) de l'élément allongé (112) est interposée entre l'extrémité libre avant du ressort de rappel et ladite surface (177) formée dans la partie avant (106) du corps formant embout.

16. Ensemble selon l'une quelconque des revendications 10 à 14, **caractérisé en ce que** le tronçon arrière de la partie arrière (106) du corps comporte un logement (114) qui reçoit le connecteur (10) dans lequel ce dernier est monté selon la direction verticale.

17. Ensemble selon la revendication précédente, **caractérisé en ce que** le logement et le bloc isolant (12) formant porte-contacts du connecteur (10) comportent des moyens complémentaires (84, 130) de butée pour déterminer la position verticale du connecteur (10) par rapport au corps et des moyens déformables élastiquement de formes complémentaires (136, 139) pour retenir verticalement le connecteur en butée dans son logement.

18. Ensemble selon l'une quelconque des revendications précédentes, **caractérisé en ce qu'**il comporte un commutateur de présence et de fin de course d'introduction de la carte, du type normalement ouvert ou normalement fermé, qui ne change pas d'état lorsque le chariot parcours, dans les deux sens, la surcourse au-delà de ladite position d'exploitation.
